# EUROPEAN PATENT SPECIFICATION

(11) **EP 1 665 855 B1**
(45) Date of publication and mention of the grant of the patent: **07.11.2007**
(21) Application number: 03818617.7
(22) Date of filing: 12.09.2003
(51) Int. Cl.: H04Q 7/38

(54) **SEAMLESS HANDOVER IN HETEROGENEOUS NETWORK**
NAHTLOSE WEITERREICHUNG IN EINEM HETEROGENEN NETZWERK
TRANSFERT INTERCELLULAIRE CONTINU DANS UN RESEAU HETEROGENE

(43) Date of publication of application: 07.06.2006
(73) Proprietor: NTT DoCoMo INC., Chiyoda-ku Tokyo 100-6150 (JP)
(72) Inventor: PRASAD, Anand, R., 80689 München (DE); WANG, Hu, Pudong Shanghai, 200135 (CN)
(74) Representative: Siegert, Georg
(86) International application number: PCT/EP2003/010184
(87) International publication number: WO 2005/027557

(56) References cited:
- EP-A- 1 111 872
- WO-A-03/003639
- WANG H ET AL: "Security context transfer in vertical handover" IEEE INTERNATIONAL SYMPOSIUM, vol. 2, 7 September 2003 (2003-09-07), pages 2775-2779, XP010678137
- OYOQUI J M ET AL: "Context transfer for seamless micro-mobility" IEEE INTERNATIONAL CONFERENCE ON COMPUTER SCIENCE, 8 September 2003 (2003-09-08), pages 291-297, XP010658690
- PREHOFER C ET AL: "A framework for context-aware handover decisions" IEEE INTERNATIONAL SYMPOSIUM, vol. 2, 7 September 2003 (2003-09-07), pages 2794-2798, XP010678141
- CAPPIELLO M ET AL: "Mobility amongst heterogeneous networks with AAA support" ICC 2002. 2002 IEEE INTERNATIONAL CONFERENCE ON COMMUNICATIONS. CONFERENCE PROCEEDINGS. NEW YORK, NY, APRIL 28 - MAY 2, 2002, IEEE INTERNATIONAL CONFERENCE ON COMMUNICATIONS, NEW YORK, NY: IEEE, US, vol. 1 OF 5, 28 April 2002 (2002-04-28), pages 2064-2069, XP010589849 ISBN: 0-7803-7400-2

## Description

### FIELD OF THE INVENTION

The invention relates to a method and device for seamless handover of a communication link between a current network and a communication device to a new network.

### TECHNOLOGICAL BACKGROUND

Wireless communication networks are becoming increasingly popular and co-exist with or even replace traditional fixed wireline communication networks. Wireless communication networks enable users to wirelessly transmit information to another user or device, such as during a telephone conversation between telephone terminals or a data communication between computing devices. A mobile telephone is one type of wireless communication device, widely used in voice and/or data communications. Similarly, a mobile computer is a type of wireless communication device, able to connect to wireless communication networks for data transmission and/or for assisting in voice communications with other communication or computing devices.

A number of different communication standards and technologies for wireless communication networks exist, offering different types of services, and networks operating according to the same or different standards may be co-located in the same geographical area or may partially overlap one another. Individual networks may also operate according to different communication standards, depending on an access technology desired by the mobile device. Likewise, mobile devices may have the capability to operate according to different standards, depending on the access technology offered by a wireless network.

A wireless communication network may have a cellular network structure, examples being mobile communication networks such as GSM (Global System for Mobile Communications), UMTS (Universal Mobile Telecommunications System), etc. A cellular network is generally sub-divided into individual cells in order to more efficiently use the available frequency spectrum for wireless transmissions between mobile devices. Two cells of the network cover given geographical areas, which may be adjacent to one another or at least partially, overlap one another.

When a mobile device engaged in a voice or data communication moves from one cell of the communication network to another cell of the communication network, a handover between these cells is performed, to hand over an ongoing communication from one cell to the other. As the individual cells of the communication network cover a larger geographical region, the mobile device can freely move within the coverage area of the network, without experiencing an interruption of an ongoing voice or data communication.

For example, if a user of a mobile device is engaged in a voice or data communication with another party, his mobile device may be connected through a first one of the cells of a serving communication network, so that communications are handled by this first cell. The other party involved in the communication may be directly connected to the network, or may be a subscriber of another network, e.g., another mobile communications network or a traditional fixed wireline communication network. When the mobile device subsequently moves into the coverage area of a second cell of the serving network, communications are handed over to the second cell of the network. After the handover, communications between the mobile device and the other party will be routed through the second cell of the network.

According to another example, the mobile device may use a service provided by a service provider, such as an email service provided by an email service provider. Again, similar to the previous example, any communication data exchanged between the service provider and the mobile device are routed from the mobile device to a cell of the serving network and then to the service provider or vice versa. Further, if the mobile device now moves into the coverage area of another cell of the serving mobile communication network, all communications pertaining to the service from the service provider are handed over to the other cell.

Usually, in neither case the user of the mobile device will notice the handover, i.e., voice communications will be maintained uninterrupted and the used email service will be continued without interruption.

If, however, the mobile device moves beyond a coverage area of the serving network or current network, communications can no longer be handled in this network, and a handover to a second network or new network becomes necessary. For example, in order to move communications from a current network to a new network, a mobile device could terminate a communication path between the mobile device and the current network, and thereafter connect to the new network, in order to reestablish the communication path through the new network.

However, networks may have different operators, and handovers may have to be carefully negotiated. Further, as noted above, with a number of different communication standards coexisting, a handover of communications between different types of networks with different capabilities may be desired or required. Therefore, while handovers within one and the same serving network may not require a significant amount of time, as the mobile device is already registered with the serving network and, e.g., only moves from one cell of the network to another of the same network, inter-network handovers between two different communication networks may require a substantial amount of time. For example, the new network selected for taking over communications from the current network may be required to negotiate with the current network characteristics of the ongoing communications, such as of a voice communication or service provision, the networks may have to exchange subscriber and authorization information and the new network may have to reserve appropriate resources for handling the communications.

Further, while a handover of a simple voice communication between two different networks may be easy to handle, a handover of a more complex communication, e.g., pertaining to a service provided through the current network, may lead to a termination of services during the handover, as the new network may lack the necessary information and thus may not be in the position to seamlessly continue the service provision.

Wang H et al: "Security context transfer in vertical handover") describes security context transfer for vertical handovers between heterogeneous networks and describes analysing trust relationships between different participants of a vertical handover. Mutual authentication procedures are performed to set up a trust relation. A mobile terminal attaches to an alternate network by going through mutual authentication that sets up a trust relation between the mobile terminal and the alternate network.

WO 03/003639 relates to facilitating a seamless handoff of IP connections between access routers in an IP network. An IP address of a previous access router is used by a new access router to learn about the capabilities of the previous access router such as bandwidth and security schemes for use in handoff decisions. An optimum target access router is selected based on acquired learned information. The previously learned information can include the inferred geographic proximity between access routers.

### SUMMARY OF THE INVENTION

It is therefore an object of the invention to provide for a seamless inter-network handover at reduced time and with continuous service provision.

The object of the invention is solved by the features of the independent claims 1 and 27, advantageous features are disclosed in the dependent claims.

A method for seamless handover of a communication link between a mobile device and a current network to a new network, includes discovering the new network, creating a trust relationship between the current network, the new network and a service provider, wherein the service provider provides a service to the mobile device through the communication link, transferring context parameters from the current network to the network, the context parameters characterizing the communication environments, and performing a handover of the communication link from the current network to the new network. By creating trust relationships between the current network, the new network and the service provider, the handover can be suitably prepared and then completed in a reduced amount of time, leading to a seamless handover of communication operations. Moreover, by transferring context parameters, the new network is enabled to set-up a required communication environment for handling the communications, avoiding an interruption or termination of a communication service.

Advantageously, the current network may perform operations to discover a new network to be involved in the handover. The selection may include selecting the new network from a number of available networks, e.g., of the most suitable new network.

Still further, the discovering step may include transmitting information about the new network from the current network to the mobile device, in order to provide the mobile device with information on the new network, e.g., identity, network characteristics, and similar.

Alternatively, if the mobile device maintains two or more active RF connections, the discovering step may include discovering the new network at the mobile device.

Advantageously, existing trust relationships between the service provider, the current network and the new network are determined, in order to identify missing trust relationships and to allow a swift creation of a trust.

If the determining step reveals existing trust relationships only between the service provider and the current network, and the current network and the new network, the current network may create a trust relationship between the new network and the service provider. In this step the current network may advantageously use existing trust information regarding the new network and the service provider, leading to a trust creation between the new network and the service provider at reduced communication and computation requirements.

Further, if the determination step reveals existing trust relationships only between the service provider and the current network, and the service provider and the new networks, the service provider may create a trust relationship between the new network and the current network.

Alternatively or in addition thereto, the new network may contact the service provider about trust related information, in order to further facilitate the creation of trust.

According to another embodiment, the service provider may transmit context information from the current network to the new network. This enables the new network to improve establishing the communication path during the handover.

Still further, the method may include measuring at least one of communication parameters of the mobile device and the new network. The parameters may include at least one of a location of the mobile device, a speed, a moving direction, and signal quality and network latency. Further, the parameters may include at least one of capabilities of the mobile device, resources of the new network, a type of service provided by the service provider, and capabilities of the new network. Advantageously, the decision whether to perform the handover may be based on the measured parameters.

Still further, the current network may perform the decision operation, and the current network may transmit information on the measured parameters to the mobile device, to enable the mobile device to perform the decision operations.

Also, the mobile device may request the current network to perform the decision operation, if the mobile device does not receive information on the measured parameters. Still further, if the mobile device maintains two or more active RF connections, it may perform the decision operation. According to another alternative, the mobile device may request the current network to perform the decision operation and to transmit information on the measured parameters to the current network.

According to another embodiment, the context parameters may be transferred prior to performing the handover, in order to reduce the time required for the handover, in order to, e.g., avoid a noticeable interruption of service.

The current network may further inform the new network and the service provider about the handover.

Still further, a mutual authentication between the new network and the mobile device may be carried out, including creating security parameters for initial access from the mobile device to the new network during the handover.

The security parameters may be generated at the new network and may be transmitted from the new network to the current network and from the current network to the mobile device.

According to another alternative, the current network may generate additional security parameters for transmission to the new network and the mobile device.

According to still another alternative, the current network may instruct the mobile device to perform the handover.

A first stakeholder may operate the current network and a second stakeholder may operate the new network.

According to another embodiment, a program may have instructions adapted to carry out any of the above operations. Further, a computer-readable medium may be provided, in which a program is embodied, where the program is to make a data processing device execute any of the above operations. A computer program product may comprise the computer-readable medium.

According to an example, control means for seamless handover of a communication link between a current network and a mobile device to a new network include: means for discovering the new network, means for creating a trust relationship between the current network, the new network and a service provider, the service provider providing a service to the mobile device through the communication link, means for transferring context parameters from the current network to the new network, the context parameters characterizing the communication environment, and means for performing a handover of the communication link from the current network to the new network.

### BRIEF DESCRIPTION OF THE DRAWINGS

- Fig. 1: illustrates a communication environment for enabling a seamless handover of a communication link between a mobile device and a current network to a new network according to a first embodiment of the invention;
- Fig. 2: illustrates operations of a method for seamless handover according to an embodiment of the invention;
- Fig. 3: illustrates elements of a communication environment for seamless handover according to another embodiment of the invention, particularly illustrating the determination and creation of trust prior to performing the handover;
- Fig. 4: illustrates operations of a method for seamless handover of a communication link according to another embodiment of the invention, particularly illustrating operations to establish trust relations;
- Fig. 5: illustrates a time sequence of operations of a method for seamless handover of a communication link according to another embodiment of the invention, particularly outlining operations for creating trust between a service provider and a new network;
- Fig. 6: illustrates a time sequence of operations for seamless handover according to another embodiment of the invention, particularly outlining the creation of trust between a current network and a new network;
- Fig. 7: illustrates operations for seamless handover according to another embodiment of the invention, particularly outlining operations to measure communication parameters and decide a handover; and
- Fig. 8: illustrates operations of a method for seamless handover according to another embodiment of the invention, particularly outlining operations for handing over the communication from the current network to the new network;
- Fig. 9: illustrates operations of a method for seamless handover according to another embodiment of the invention, particularly outlining operations for transferring context parameters from the current network to the new network;
- Fig. 10: illustrates operations of a method for seamless handover according to another embodiment, particularly outlining operations for transferring context parameters from the current network to the new network;
- Fig. 11: illustrates operations of a method for seamless handover according to another embodiment, particularly outlining operations for transferring context parameters from the current network to the new network;
- Fig. 12: illustrates operations of a method for seamless handover according to another embodiment, particularly outlining operations for transferring context parameters from the current network to the new network; and
- Fig. 13: illustrates operations of a method for seamless handover according to another embodiment, particularly outlining operations selecting a target network for the handover.

### DETAILED DESCRIPTION OF THE PREFERRED EMBODIMENTS

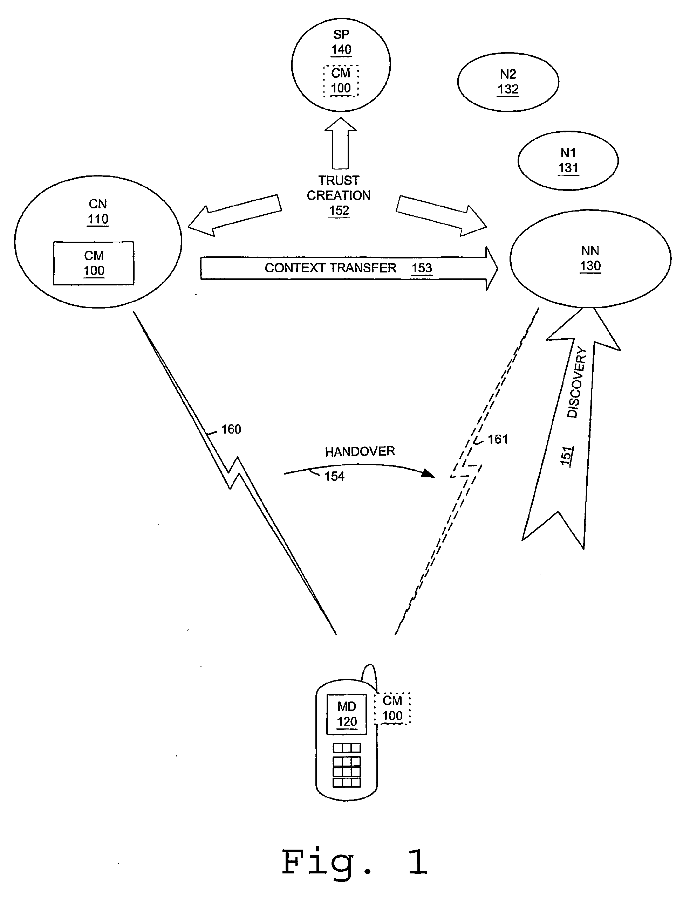

In the following, a first embodiment of the invention will be described with regard to Fig. 1.

Fig. 1 illustrates elements of a communication environment for seamless.handover of a communication path established between a mobile device and a current network to a new network.

Generally, a user of a mobile device may be engaged in a voice or data communication with another party while his mobile device may be connected to a current network, i.e. a serving communication network. Similarly, a user of the mobile device may use a service provided by a service provider, such as an email service provided by an email service provider or similar and any communication data exchanged between the service provider and the mobile device are routed through the current network.

When the mobile device moves within the coverage area of the current network, communications can generally be maintained through the current network, e.g. by handing over the communication between different coverage areas or cells of the current network.

If, however, the mobile device moves beyond a coverage area of the current network, communications can no longer be handled in the current network, and a handover to a new network becomes necessary. The current network and the new network will generally be operated by different owners or stakeholders, and may use the same or different access technologies. Nevertheless, it is also possible that the same stakeholder operates the current network and the new network or may even form separate portions of a larger network entity.

A so-called inter-network handover of a mobile device engaged in a communication with another party, such as another mobile device or a service provider, may occur between networks with adjacent geographical coverage areas. In this case communications between the mobile device and the current network are handed over to the new network, if the mobile device approaches the boundary of the coverage area of the current network.

Moreover, an inter-network handover may also take place between networks covering overlapping or even the same geographical regions, e.g., if a first networks experiences an overload condition, if a communication connection with the current network is bad or interrupted, if a service requirement cannot be met, etc. Also, a handover of communications may be required in cases where a mobile user obtains services from a service provider and when the current network handling the communication is not or not any longer able to provide the requested service characteristics, such as bandwidth, service features and similar.

The communication environment of the embodiment of the invention shown in Fig. 1 enables the above described handovers between two networks. More precisely, the communication environment shown in Fig. 1 enables a seamless handover of a communication service from a current network to a new network by performing a preparatory phase of the handover. Seamless handover stands for a handover which does not involve a significant degradation of the communication link and communication service provided. Ideally, the user of the mobile device will not even notice the seamless handover. The preparatory phase of the handover allows the new network to more quickly take over communications during the actual handover and further enables the new network to readily continue the ongoing communications, e.g. a communication with another mobile device or a service provided by a service provider.

The preparatory phase of the handover includes creating trust relationships between the current network, the new network and the service provider, and by transferring context information from the current network to the new network prior to performing the actual handover. Thus, as a trusted environment between the current network and the new network and the service provider is established in preparation of the handover, time consuming trust negotiations during the handover can be avoided. Moreover, as the new network already holds information characterizing e.g. the communication link to the mobile device to be handed over from the current network, the set-up of the communication link can be prepared the actual handover can be performed at a reduced time delay. The communication link is a connection between the mobile device and a network for exchanging information, such as data or voice. Moreover, as the new network may obtain context information on the communication service to be handed over, the set-up of the communication service can be prepared and an interruption of services can be avoided.

Referring now in detail to Fig. 1 the communication environment includes a current network 110, a mobile device 120, a new network 130, and a service provider 140. Further, Fig. 1 illustrates control means 100 for controlling the operation carried out in order to hand over the communication. As shown, the control means 100 may be at least partially integrated into the current network 110, the mobile device 120, the new network 130, and the service provider 140, or may form a separate entity.

Further, the mobile device 120 is considered to have an active communication link 160 to the current network 110. The communication link 160 is used to provide a communication service from the service provider 140 to the mobile device 120. For example, the service could be an email service, any kind of data service, voice services and similar. Alternatively, the service provider may be another mobile device, engaged in a voice or data communication with the mobile device 120.

In Fig. 1 it is assumed that the communication link 160 between the mobile device 120 and the current network 110 is to be handed over to the new network 130, e.g., due to the above outlined reasons, such as a movement of the mobile device 120 into the coverage area of the new network 130. After the handover, illustrated at 154, of the communication link to the new network, the communication service from the service provider 140 will be provided through the new network 130 and the handed over communication link to the mobile device 120, as illustrated at 161.

However, the new network and the current network may be operated by different owners or stakeholders, and the new network may not be aware of the characteristics of the mobile device 120, the type of communication service provided by the service provider 140, and by further elements or requirements of the communication link to be established. Still further, the current network and the new network and the service provider may be separate environments without mutual trust relationships, i.e. separate environments without a fundamental agreement to perform mutual inter-network handovers of communication links and/or services.

Accordingly, prior to actually handing over the communication link 160 to the new network 130, it must be ensured that there is a trust relationship between the current network, the new network and the service provider, as indicated at 152. Moreover, in order to provide for a smooth transfer of the communication service provided by the service provider, context information is to be transferred from the current network to the new network, as indicated at 153.

Therefore, in a first sequence of operations, the existence of mutual trust relationships is determined and/or missing mutual trust relationship between the current network, the new network and the service provider is created. Further, context information is transferred to the new network and thus the handover is suitably prepared and may be carried out in a short amount of time and without noticeably interrupting the communication service provided.

Prior to the determination and/or creation of mutual trust relationships between the current network, the new network and the service provider and prior to the context transferred, a discovery operation to select and/or determine the identity of the new network needs to be conducted.

The discovery operation is indicated at 151 in Fig. 1 and may include selection operations for selecting the new network from a number of available network candidates. Fig. 1 illustrates three exemplary network candidates, including the new network 130 and two further networks 131 and 132. In the present situation it is assumed that the new network 130 is selected as an appropriate candidate for the handover, as it will be outlined further below.

As noted above, control means 100 are provided for controlling the discovery operations, the trust creation operation and the context transfer operations prior to the handover. Preferably, the control means 100 includes means for discovering the new network 130, means for creating a trust relationship between the current network, the new network and the service provider, means for transferring context parameters from the current network to the new network and means for performing the handover of the communication link from the current network to the new network.

According to an example, the control means is at least partially integrated into the current network 110, in which case the current network may perform the operations for discovering the new network, creating a mutual trust relationship between the current network, the new network and the service provider, for transferring context parameters from the current network to the new network and for performing or instructing the handover of the communication link to the new network.

According to an alternative, elements of the control means 100 may be integrated into the service provider 140. According to an example, the service provider performs operations for creating a mutual trust relationship between the service provider, the current network and the new network, and the service provider 140 performs operations for transferring or relaying context parameters from the current network to the new network.

Still further, according to another embodiment, at least portions of the control means 100 may be integrated into the mobile device 120. For example, the mobile device 120 may performs operations for discovering the new network 130, i.e., the mobile device may perform operations for selecting an appropriate new network from a number of available networks, such as the networks 130, 131, and 132. Moreover, the mobile device 120 may initiate the handover and instruct the current network and/or the service provider and the new network to create mutual trust relationship and to transfer context from the current network to the new network.

The embodiment enables a fast handover of communications from the current network to the new network without experiencing a significant degradation of services during the handover. Further, the handover becomes possible between different networks, e.g., operated by different stakeholders, allowing to re-use existing networks and exchanging communication traffic between different networks. Further, by providing a standardized solution for performing the handover, existing communication protocol can be used to exchange the required messages between the current network, the mobile device, the service provider and the new network. Still further, as to the handover a mutual trust relationship is established, security levels can be maintained, i.e., communications will not be handed over into an untrusted environment. For example, messages required for determining and/or creating mutual trust relationships and messages required for transferring context information to the new network can be added on existing messages and/or data messages, thus requiring only minimal adaptations to wireless systems operating under communication standards, such as GSM, UMTS, D-AMPS, the IEEE 802.11 standard, 3G (Third Generation) or beyond 3G network; and others.

In the following, the communication environment shown in Fig. 1 will be outlined in further detail. It is noted that the following constitutes examples only and should not be construed as limiting the invention.

The mobile device 120 shown in Fig. 1 is shown as a mobile telephone, but may instead also be any other kind of mobile communication device. For example, the mobile device may be a mobile computing device and similar, including laptop computers, PDAs (Personal Digital Assistance), etc. The mobile device 100 is involved in a one- or bi-directional communication with the service provider 140 or any other element of a communication system, including another mobile or fixed wireline communication device.

The mobile device may operate in accordance with any standard, such as GSM, UMTS, D-AMPS and, may operate according to a wireless LAN standard or standard for wireless communication networks with distributed medium access control, including IEEE 802.11, "Wireless LAN and medium access control (MAC) and physical layer PHY) specification", 1999. A heterogeneous or ad-hoc network is a wireless network formed without a central administration or without a centralized management of communication resources, such as assignment of communication channels to communicating parties, etc.

The mobile device may be capable of implementing a plurality of standards or access technologies and thus be able to connect to wireless communication networks operating in accordance with different standards.

The mobile device may further be able to operate more than one RF connection to support the different standards. Further, this enables the mobile to maintain an active communication with the current network, while at the same time monitoring signals from other communication networks. Here, RF connection stands for the capability of the mobile device to receive and analyze information transmitted on a particular frequency, time slot, with a particular code, and similar, depending on the access technology used by a network. For example, the mobile device may also be able to maintain at least one RF connection according to each access technology the mobile device supports, such as GSM, UMTS, D-AMPS, 3G (Third Generation) or beyond 3G networks, wireless LAN standards, and similar.

Communications carried out by or using the mobile device 100 may involve voice communications and/or data communications, e.g., in a regular telephone call or in a data communication between the service provider and the mobile device. Combined approaches are also conceivable.

The mobile device may obtain any kind of communication service from the service provider 140, such as a data service pertaining to news provision, email services, local event information, traffic information, booking services, banking transaction services, and similar. Also, the communication service may include access to a communication network of a company, including company-wide communication networks provided with a firewall for restricting access from the outside.

The mobile device 120 preferably includes a processor and a memory for storing coded instructions for implementing the communications functionalities of the mobile device, including functionality of the control means 100 for discovering the new network 130, instructing the current network to perform a handover, to provide information on the new network to the mobile device, and similar.

The mobile device may also include means to determine the necessity of an inter-network handover from the current network to a new network and may base the handover decision on information received from the current network and/or the new network. For example, the current network may suggest a handover if a communication load at the current network is excessive, or if resource requirements for the communication service have changed and cannot any longer be satisfied by the current network. Moreover, it is conceivable that the mobile device decides to perform the inter-network handover if communication requirements change and/or if the current network is unable to allocate sufficient or appropriate resources for the communication. For example, a transmission bandwidth requirement during a communication may change, if larger amounts of data need to be transmitted in the service application, or if communication requirements need to fulfill certain standards, such as a real-time requirement.

The current network 110 may constitute any kind of wireless communication network operating to any communication standard or combinations thereof, such as GSM, UMTS, D-AMPS, wireless LAN standards, 3G (Third Generation) or beyond 3G networks, etc. Still further, the current network may form at least part of a heterogeneous communication network, such as an ad-hoc communication network. It is possible that the current network integrates at least parts of the control means 100, and may include at least one processing unit and at least one memory for storing coded instructions making the processor, when loaded, to execute the above-outlined functionality of the control means and/or other functionality of the current network.

The new network 130, similar to the current network, may be constituted by any kind of wireless communication network. The current network and the new network may be operated by different stakeholders, i.e., different operating entities, however, it is also possible that the current network and the new network constitute different networks operated by the same stakeholder, or may even constitute different separate portions of a single communication network.

While it is possible that the current network and the new network operate according to the same communication standard, it is well possible that the current network and the new network operate according to different communication schemes. For example, the current network may operate according to the GSM standard, while the new network constitutes a heterogeneous communication network operating according to the IEEE 802.11 standard.

Along the same line, the further networks 131 and 132 shown in Fig. 1 may constitute any kind of communication network operating according to any communication standard, being the same or different from the current network and/or new network. While in the present case it is assumed that the new network 130 is selected for the handover, in other examples it may well be possible that another of the communication networks, i.e., network 131 or network 132, is selected for a handover.

The service provider 140 may be constituted by any kind of entity providing any kind of communication service to subscribers, e.g., to a mobile device, through a wireless network such as the current network 110 and the new network 130. As noted above, the communication service may pertain to any kind of data or voice service, e.g., a service to which the user of the mobile device 120 has subscribed. The service provider may form part of one of the networks, e.g., the current network or the new network, or may form a separate entity, communicating with the current network and the new network to wireline or wireless communication links. While the service provider may be a larger organization serving a large number of service subscribers, it is also possible that a communication device constitutes the service provider, providing a service to the mobile device 120. For example, the service provider could be a home computer, a PDA, a laptop computer, or any other mobile device exchanging data with the mobile device 120.

Before the handover indicated at 154, any data pertaining to the communication service provided by the service provider will be forwarded from the service provider 140 to the current network 100 and through the communication link 160 to the mobile device 120 and vice versa. After the handover, data pertaining to the communication service will be forwarded from the service provider 140 through the new network 130 and the communication link 161 to the mobile device 120.

As noted above, after detecting the necessity or desire to perform a handover, in a first sequence of operations, as indicated at arrow 151, an appropriate new network is selected from a number of candidates. The discovery may be executed at the current network and/or the mobile device. For example, the current network and/or the mobile device may discover the new network based on a beacon signal broadcasted by each network. Receiving the beacon signals from the nearby-located candidate networks, the current network and/or the mobile device may analyze the beacon signal to discover the identities of the nearby candidate networks.

After discovering a number of candidate networks, an appropriate one of the networks is selected as new network. The selection may be based on capabilities of the found networks, e.g., the ability to handle the communications after the handover, resource availability and similar. Further, the selection may be based on measured parameters, such as a location of the mobile device, a velocity of the mobile device, a moving direction, signal quality, and the network latency. Still further, the selection may be based on capabilities of the mobile device, e.g., capabilities to communicate with a candidate network, resources of the new network, a type of service provided by the service provider, and similar.

While the current network may perform the decision operation of the basis of the measured parameters and capabilities, it is also possible that the current network transmits information on the measured parameters and capabilities to the mobile device, e.g. upon a request from the mobile device, to enable the mobile device to perform the decision operation. Particularly in case the mobile device maintains two or more active RF connections, the mobile device may perform the decision operation itself.

Still further, the mobile device may request the current network to perform the decision operation if the mobile device does not receive information on the measured parameters or, according to still another alternative, the mobile device may request the current network to perform the decision operation and transfer information on the measured parameters to the current network.

The embodiment of Fig. 1 illustrates operations to suitably prepare a handover of communications from a current network to a new network, in order to reduce a time required for the handover and further to avoid interruptions or a termination of a communication service.

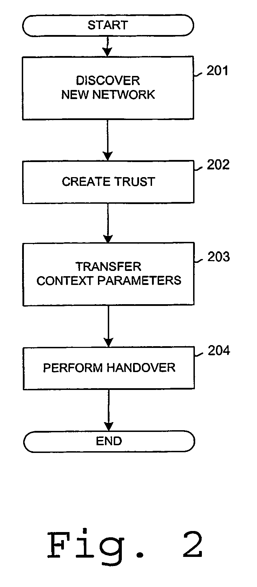

In the following, a further embodiment of the invention will be described with regard to Fig. 2.

Fig. 2 illustrates operations of a method for performing a seamless handover of a communication link between a mobile device and a current network to a new network, the communication link carrying a communication service from a service provider. The operations of Fig. 2 may be carried out using the communication environment as shown in Fig. 1, however, Fig. 2 is not limited thereto.

In a first operation 201, a new network is discovered. The discovery operation includes determining the identity of a new network to which the communication link is to be handed over, and will preferably include determining certain characteristics of the new network, such as access technology, capabilities, etc.

The discovery step, as noted above, may be carried out by a current network, such as the current network 110 shown in Fig. 1. For example, the current network may determine a number of neighboring or overlapping communication networks as possible candidates for the new network and may perform a decision operation based on the above-described determined parameters. Alternatively, a mobile device, such as the mobile device 120, may perform the discovery of operation, i.e., may collect information regarding potential new networks and may perform a selection step.

The current network and/or the mobile device can collect the information pertaining to the candidate new networks by monitoring beacon signals transmitted by each network, or by analyzing further information or messages transmitted by the candidate new networks. If the mobile device is capable of maintaining two or more RF connections, the mobile device may be actively participating in the communication service delivered by the service provider, such as the service provider 140 shown in Fig. 1, and at the same time may monitor information transmitted by further networks, e.g. networks using the same or different access technologies, as noted above. Similarly, if the current network performs the discovery step, the current network detects candidate new networks using different access technologies.

Information characterizing the new network, e.g., identity information, access technology used, etc., may be exchanged between the current network and the mobile device, to facilitate the handover procedure.

In an operation 202, further preparing the actual handover, trust relationships are established between the current network, the new network and the service provider. A trust relationship between two entities may include mutually verifying the identities for authentication purposes, exchanging security parameters for security data transfer, and determining the authorization of each entity to access the respective other entity.

According to an example, the point-to-point (PTP) extensible authentication protocol (EAP) may be used to authenticate two entities for creation of trust. EAP defines an authentication protocol for communication between peers over point-to-point links. Basically, one of the entities requests a proof of identity from the other entity, which proof may be, for instance, a simply one-time-password or some challenge-response type authentication, or a complex protocol like EAP TLS (Transport Layer Security) protocol, which performs negotiation as well as distribution of session keys. A request for authentication is sent from one of the two entities to the other and receives in return a response, which is validated by an authenticator. Still further, other authentication schemes for creating trust between two entities can be used, such as the RADIUS protocol, constituting an indirect authentication scheme, where authentication is run against a central server storing respective identity data for every known communicating entity. Still further, public/key cryptography can be used to build systems with mutual trust, such as the RSA algorithm, which can be used for encryption and decryption. Public/key cryptography uses a pair of keys, the public and private key. Either key can be used for encryption and respective decryption. Initially, key pairs are generated, the private key is stored with the respective entity, and the public key is made known to third parties, including the respective other entity. Using the private and public keys, a secure communication between the two entities becomes possible.

The trust relationships between the current network, the new network and the service provider may be created on-the-fly, i.e., during the preparatory phase of a handover, or may be created beforehand, e.g., upon network deployment, after reaching frame agreements between stakeholders of the current network, the new network and/or the service provider, or at any other point in time.

It is therefore possible that some mutual trust relationships will already exist, in which case operation 202 includes determining the presence of trust relationships between the current network, the new network and the service provider, and the creation of missing trust relationships, as noted above.

In an operation 203, context parameters are then transmitted from the current network to the new network, the context parameters characterizing the communication environment. Generally, the context information may include anything that can be observed with computers in connection with the communication link to be handed over to the new network. The context information supports the new networks in the task of establishing the communication link to the mobile device, and may further support the new network in maintaining a service provided by the service provider to a user of the mobile device. Examples of the context information include user-related information such as user profiles, e.g., including a user ID, user authorizations, user preference, user behavior, etc. Further, examples include information pertaining to the communication link to be established between the new network and the mobile device, and include an access technology required for the mobile device, capabilities of the mobile device, and similar. Still further, examples include information pertaining to the service provided by the service provider, and include a service type, a service level agreement, service characteristics such as user settings and preferences for obtaining the service, user subscription information, and similar.

The context parameters can be collected at the current network and then transmitted to the new network. Alternatively, or in addition thereto, the mobile device may collect at least some context parameters and may instruct the current network to transfer the context parameters to the new network.

The transfer of the context from the current network to the new network may be performed directly, e.g., via a communication link established between the current network and the new network, or may be transmitted over the service provider to the new network, e.g., via communication links between the current network and the service provider, and between the service provider and the new network. It is furthermore possible that a portion of the context parameters is transmitted directly from the current network to the new network, e.g., context parameters pertaining to the communication link to be established between the new network and the mobile device, and another portion of the context parameters can be transmitted from the current network to the new network via the service provider, e.g., context parameters pertaining to the service provided.

Based on the context parameters the new network can determine and allocate the required resources, contact the service provider to prepare the set-up of the communication service, prepare the establishing of a communication link to the mobile device based on a specified access technology and/or access characteristics, and similar.

The context parameters thus enable the new network to take all preparatory steps before the handover, so that the actual handover can be carried out in a short amount of time and without an interruption of the service provided to the user of the mobile device.

After the creation of trust and the context transfer, the actual handover is performed in an operation 204. The current network and/or the mobile device may initiate the handover. For example, it is possible that the current network instructs the mobile device to perform the handover and transmits relevant data to the mobile device or, vice versa, it is possible that the mobile device instructs the current network to perform the handover.

The handover may include creating of security parameters at the new network and exchanging of the security parameters with the mobile device. In an example, the security parameters are exchanged between the new network and the mobile device prior to the handover through the current network with an exchange of security parameters before the actual handover, authentication operations after the handover can be of reduced complexity, and further accelerate the handover procedure.

It is also possible that the current network generates security parameters for transmission to the new network and the mobile device, e.g., on the basis of authentication and authorization data generated and stored in association with the communication link between the current network and the mobile device prior to the handover.

The operations of Fig. 2 illustrate the improved process for inter-network handovers with a preparatory phase including the creation of mutual trust relationships between the current network, the new network and the service provider, and the exchange of context information between the current network and the new network, in order to reduce the time required for the actual handover and in order to avoid an interruption or termination of the service.

The operations described above may be performed by the control means 100, which may be at least partially integrated into the current network 110, the mobile device 120, the new network 130, and the service provider 140, or may form a separate entity.

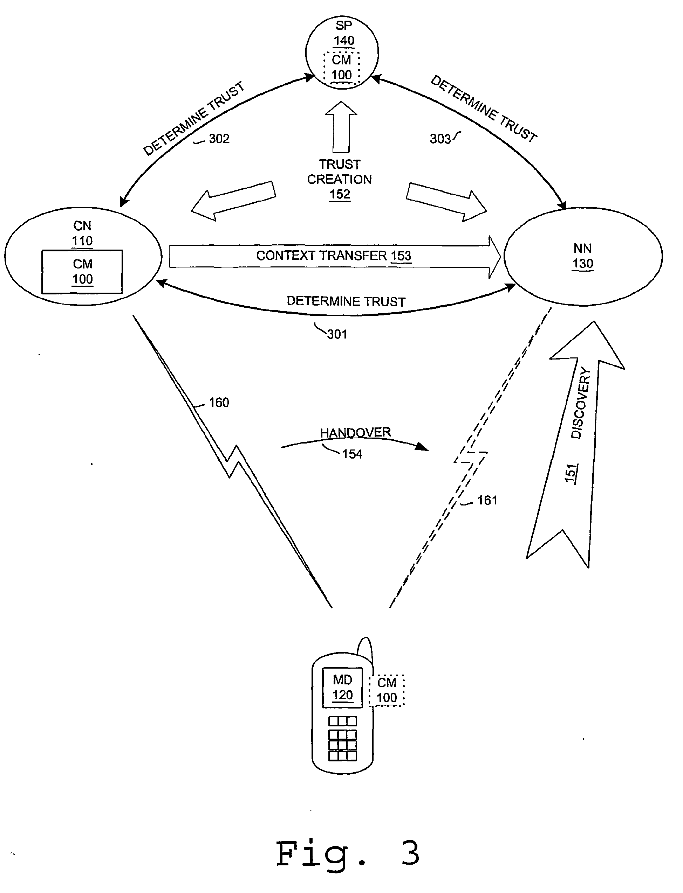

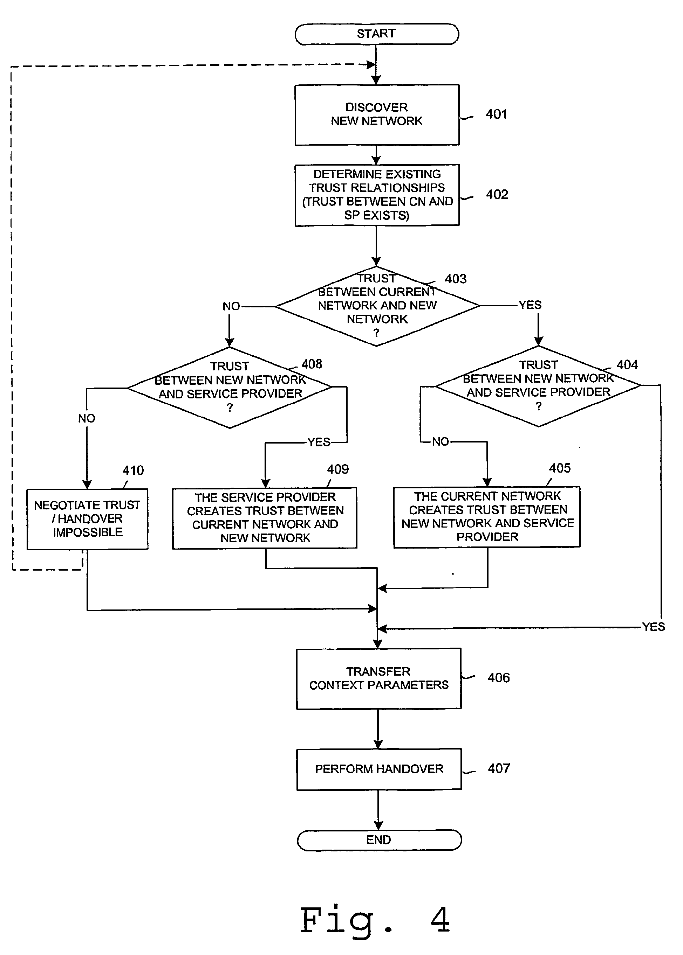

In the following, a further embodiment of the invention will be described with regard to Fig. 3.

Fig. 3 illustrates elements of a communication environment for seamless handover, particularly outlining further details of the preparatory phase of the handover, including the determination and creation of trust and the context transfer.

Similar to Fig. 1, Fig. 3 illustrates a current network 110, a new network 130, a mobile device 120, control means 100, and a service provider 140. Also, similar to Fig. 1, it is assumed that a handover of a communication link 160 between the current network and the mobile device to the new network is to take place, leading to the creation of a communication link 161 between the mobile device and the new network, as noted before. A detailed description of the above elements with regard to Fig. 3 is therefore not repeated.

Further, in the preparatory phase of the handover indicated at 154, the new network is discovered, as indicated at 151, and as outlined with regard to Fig. 1.

Further, in the preparatory phase, the existence of a trust relationship between the current network 110 and the new network 130 is determined, as illustrated at 301. This determination operation may be performed by the current network, reviewing, e.g., registration information, in order to determine whether at a previous point in time a trust relationship has been established between the current network and the new network. For example, the trust relationship could have been established at an earlier point in time, e.g., during a previous handover procedure, or on network deployment. The determination operation for determining whether a trust relationship exists between the current network and the new network is indicated at reference numeral 301.

The determination operation 301 may include the exchange of messages between the current network and the new network in order to determine an existing trust relationship, and/or to verify an existing trust relationship. This may involve the exchange of security parameters for verification purposes.

Similarly, in an operation 302, it is determined whether a trust relationship exists between the current network 110 and the service provider 140. In this case, the current network and/or the service provider may determine the existence and/or verify a mutual trust relationship.

Still further, in an operation 303, similar operations are performed to determine the existence and/or to verify a trust relationship between the service provider 140 and the new network 130.

The above operations for determining the existence of mutual trust relationships between the current network, the service provider and the new network, and the verification of the mutual trust relationships may be handled by the control means 100, which, as noted in connection with Fig. 1, may form a separate entity and/or which may be at least partially realized as an integral part of the current network and/or the new network and/or the service provider.

If the determination operation reveals that only some of the mutual trust relationships exist, the missing trust relationships are created in operation 152.

In a first example, a mutual trust relationship exists between the current network 110 and the service provider 140, and a mutual trust relationship exists between the current network 110 and the new network 130. However, between the service provider 140 and the new network 130, a mutual trust relationship could not be detected. In this case, the current network 110, having mutual trust relationships with the service provider and the new network, will mediate between the service provider and the new network, in order to also create a trust relationship between the service provider and the new network. The mediation may include an exchange of trust-related information and parameters with the service provider and the new network, including security parameters. The creation of the trust relationship between the service provider and the new network may involve a direct transmission of information between the service provider and the new network, however, in an alternative it is also possible that the trust relationship between the service provider and the new network is generated solely based on an exchange of trust-related information between the current network and the service provider on the one hand and on the other hand between the current network and the new network.

In another example, mutual trust relationships exist between the current network 110 and the service provider 140, and between the service provider 140 and the new network 130. However, a mutual trust relationship between the current network and the new network does not yet exist. In this scenario, similar to the above example, the service provider mediates for generating a trust relationship between the current network and the new network.

If more than one mutual trust relationship between the current network, the new network and the service provider is missing, a determination operation can be performed, in order to determine another entity of the network environment having mutual trust relationships for mediating in the creation of the missing trust relationships. This further entity could, e.g., be another network or another service provider.

According to another example, the new network contacts the service provider about trust relation information in order to further facilitate the creation of trust. For example, the new network may contact the service provider regarding trust information of a trust relationship between the service provider and the current network.

After the above-outlined determination operations for determining and/or creating mutual trust relationships between the current network, the new network and the service provider, the context transfer takes place between the current network and the new network, e.g., as outlined above.

Thereafter, the preparatory phase for the handover is completed and the current network and/or the mobile device can proceed to perform the actual handover, as indicated at arrow 154. After the handover and establishing the communication link 161 between the mobile device 120 and the new network 130, the service provider 140 can provide the service through the new network.

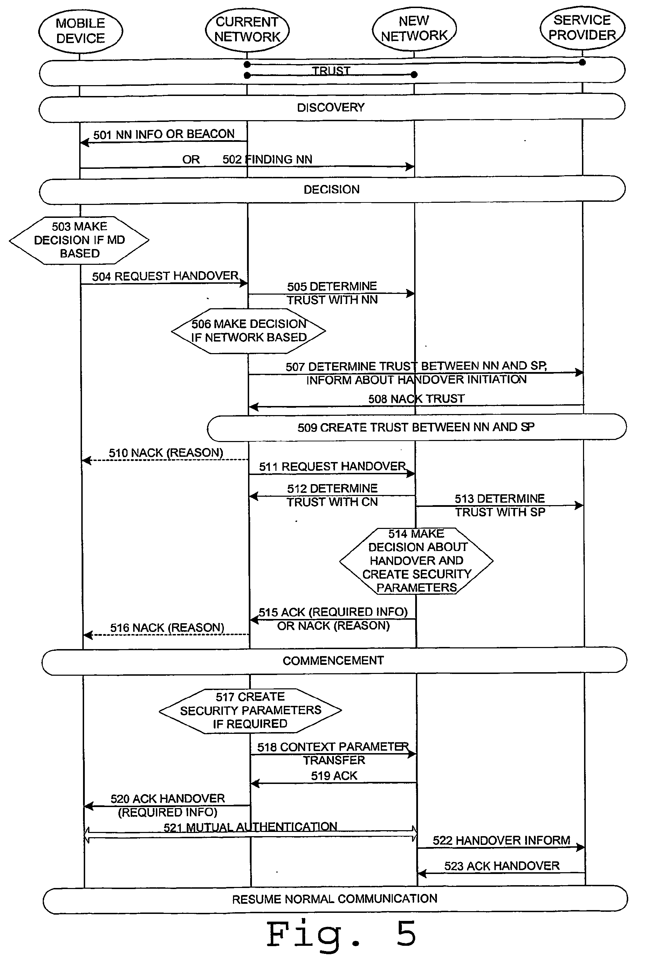

In the following, a further embodiment of the invention will be described with regard to Fig. 4.

Fig. 4 illustrates operations of a method for seamless handover, particularly outlining operations for determining and creating mutual trust relationships.

The operations shown in Fig. 4 may be carried out using the communication environment shown in Figs. 1 or 3, however, Fig. 4 is not limited thereto.

In a first operation 401, the new network is discovered, e.g., from amongst a number of available candidate new networks in the vicinity of the current network and/or the mobile device. The discovery operations may be as outlined with regard to previous embodiments.

In an operation 402, existing trust relationships between the current network, the new network and the service provider are determined. The determination operation 402 may be carried out outlined with regard to previous embodiments, i.e., registrations may be reviewed, in order to determine existing trust relationships, and trust relationships may be verified.

In an operation 403, it is then decided if a trust relationship between the current network and the new network exists. If the decision in operation 403 is "YES", i.e., trust exists between the current network and the new network, in an operation 404 it is decided whether a trust relationship exists between the new network and the service provider.

If in operation 404 the decision is "NO", i.e., a trust relationship between the new network and the service provider does not exist, in an operation 405 the current network creates or mediates a trust relationship between the new network and the service provider. As outlined before, this may include the exchange of security parameters, identities of stakeholders, the networks, and similar, between the current network and the new network, and between the current network and the service provider.

Thereafter, in an operation 406, context parameters are transferred to the new network. For example, the context parameters may be collected by the current network and/or mobile device and transferred to the new network either directly, or via the service provider, as detailed before.

Thereafter, in an operation 407, after the preparatory phase of the handover is completed, the actual handover can be performed, as detailed with regard to previous embodiments.

If in operation 404 a decision is "YES", indicating that the trust relationship between the new network and the service provider exists, and therefore there exists mutual trust relationships between all elements, i.e. the new network, the current network and the service provider, the flow directly proceeds to operation 406, for the transfer of context parameters.

If in operation 403 the decision is "NO", indicating that a trust relationship between the current network and the new network does not exist, it is decided in an operation 408, whether a trust relationship exists between the new network and the service provider.

If in operation 408 the decision is "YES", indicating that a trust relationship between the new network and the service provider exists, in an operation 409 the service provider mediates or creates a trust between the current network and the new network, similar to operation 405, and detailed with regard to previous embodiments.

If in operation 408 the decision is "NO", indicating that a trust relationship between the new network and the service provider does not exist, in an operation 410 it is either possible that a corresponding trust relationship is negotiated between the new network and the service provider, i.e., on the fly during the preparatory phase of the handover, or, if this is not possible, a handover-impossible message can be created and the user of the mobile device can be correspondingly informed.

If in operation 410 a trust relationship could not be negotiated between the new network and the service provider, and thus the handover is not possible, the flow of operations may return to operation 401, to discover an alternate new network for the handover.

Subsequent to operation 410, if a trust relationship between the new network and the service provider could be created, and subsequent to operation 409, the flow proceeds to operation 406 for transferring the context parameters.

The above operations may be carried out by the control means 100 located at the current network, the service provider and the new network.

Fig. 4 illustrates different scenarios with different existing mutual trust relationships between the current network, the new network and the service provider, and the subsequent mediation and creation of further trust relationships, in order to suitably prepare the handover. After the creation of all required trust relationships and the transfer of context parameters, the actual handover can take place at a reduced amount of time and a service interruption can be avoided.

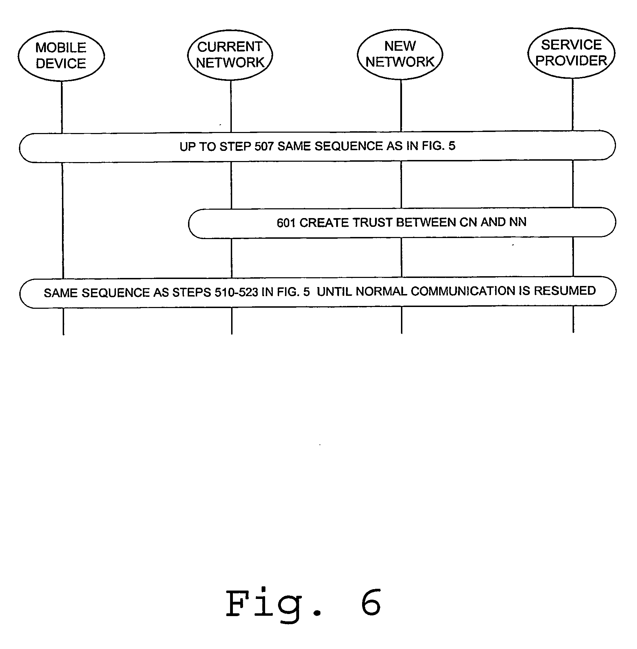

In the following, a further embodiment of the invention will be described with regard to Fig. 5.

Fig. 5 illustrates a sequence of operation diagram describing a sequence of operations for the handover of a communication link between a mobile device and a current network to a new network and in particular, the operations involved in discovering of the new network, creating a trust relationships, deciding to perform a handover and commencing the handover for a trust relationship, in which the current network and the new network as well as the current network and the service provider have already existing mutual trust relationships. Further, it is also feasible that trust relationships between the networks, the service provider and the mobile device exist.

The operations shown in Fig. 5 may be carried out using the communication environment shown in Figs. 1 or 3, however, Fig. 5 is not limited thereto. Furthermore Fig. 5 is only an example and other possible sequences involving similar operations are also possible.

In the discovery phase, in operation 501 the current network 110 sends information about the new network 130 including parameters such as identity and network latency to the mobile device 120 or broadcasts a beacon signal informing the mobile device that the new network is in its vicinity. Such a beacon signal can be an RF signal sent out periodically or only when needed, for example when a different network comes into the vicinity of the mobile device or signal quality of the current communication link is deteriorating.

On the other hand, when the mobile device already knows about the new network in its vicinity because it is able to detect in operation 502 the new network itself with an RF signal or the like, for example the mobile device is able to maintain two or more active RF connections, operation 501 may not be required.

In the decision phase, the mobile device can make a decision about a handover after it has discovered the new network in operation 503.

In the following operation 504, the mobile device sends a handover request to the current network together with decision information including measured parameters described in detail in previous embodiments and which is only send if the mobile device is authorized to decide or support the handover.

However, if the current network decides about the handover, the current network determines in operation 505 its trust relationship with the new network and makes the decision about the handover in operation 506.

In operation 507, the current network determines the existing trust relationship between the new network and the service provider and informs the service provider about handover initiation. This trust relation inquiry is not needed if the current network, new network and service provider already know about each other's trust relationship. Alternatively, information about the handover can also be sent at a later stage in the operational sequence, but it is mandatory to happen.

In this trust relationship configuration, the service provider negatively acknowledges (NACK) in operation 508 that it has any trust relationship with a new network.

Therefore, in operation 509, the current network creates trust between the new network and the service provider, wherein the trust creation between the new network and the service provider can be for one-time usage only or for multiple usages, in which multiple usages is beneficial for future handovers.

In case this trust creation is not successful, a NACK message with reasons for the failure is sent to the mobile device in operation 510 and the operational sequence is repeated from the beginning.

Otherwise, the current network sends a handover request to the new network in operation 511 and the new network determines if it has a trust relationship with the current network in operation 512 and the service provider in operation 513 and decides in operation 514 about allowing the handover based on available capacity, etc. Then, the new network creates security parameters including mutual authentication parameters, which is information required by the mobile device for initial access to the new network, wherein authentication parameters include parameters to identify an entity in a network to determine its preferences or enable secure content exchange through private-public key paths.

Consequently, in operation 515, the new network acknowledges the handover to the current network and sends the created security parameters to the current network, or in case the handover failed, it sends a NACK message with reasons for the failure to the current network, which is subsequently forwarded to the mobile device in operation 516.

In the commencement phase, in the first operation 517, the current network creates security parameters if required, which have to be sent to the mobile device and new network for mutual authentication and initial access. This operation indicated with reference numeral 517 can also happen after operation 519, however, it has to happen before operation 520. Furthermore, it is also possible that the information received from the new network in operation 515 is enough and operation 517 is not required.

In operation 518, context parameters are sent to the new network by the current network together with security parameters if the current network creates the security parameters, wherein the context parameters are described in another embodiment above.

In operation 519, the new network acknowledges receiving the context parameters, and in operation 520, the current network acknowledges the handover and sends any required information about the new network together with the security parameters to the mobile device.

If the mobile device did not request handover previously, then instead of an acknowledgement the current network requests the mobile device to handover and sends the required information and security parameters.

After the acknowledgement operations 519 and 520, a mutual authentication takes place in operation 521 between the mobile device and the new network.

Finally, the new network informs the service provider about the handover in operation 522, and the service provider acknowledges the handover in operation 523.

After these operations, the handover is performed and normal communication resumes between the mobile device and the new network.

Fig. 5 illustrates the time sequence of the operations involved in the preparation of the handover and the subsequent handover itself. It can be seen that the actual handover requires only few operations, since most of the necessary operations are performed in advance in the preparatory phase, which enables a fast and efficient seamless handover.

Furthermore, another embodiment in conceivable, in which a trust relationship between the service provider and the new network, as described above, does not have to be created before the handover, if the current network acts as an intermediary and forwards security parameters, context parameters and other information to the service provider from the new network or vice versa. At a later point in time, a direct trust relationship between the service provider and the new network could be established to avoid communication overload by the usage of the current network as mediator.

The operations described above in Fig. 5 may be performed by the control means 100, which may be at least partially integrated into the current network 110, the mobile device 120, the new network 130, and the service provider 140, or may form a separate entity.

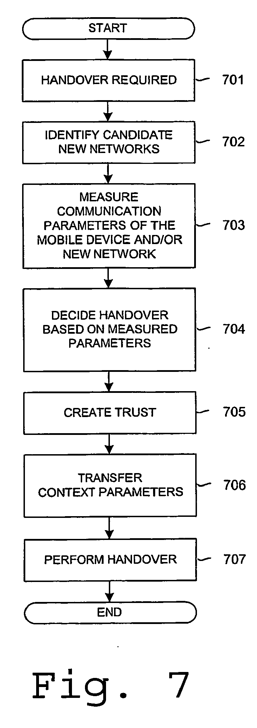

In the following, a further embodiment of the invention will be described with regard to Fig. 6.

Fig. 6 illustrates the sequence of operation for the handover of a communication link between a mobile device and a current network to a new network according to another embodiment, in which the current network and the service provider as well as the new network and the service provider have already existing mutual trust relationships. Furthermore, it is feasible that the mobile device has trust relationships with the networks and the service provider.

The operations shown in Fig. 6 may be carried out using the communication environment shown in Figs. 1 or 3, however, Fig. 6 is not limited thereto.

The sequence of operations in establishing trust relationships between the current network and the new network and performing a handover of the communication link between the mobile device and the current network to the new network is similar to the sequence illustrated in Fig. 5 and will therefore not be repeated in detail. Basically the same operations 501-507 are required for this trust relationship configuration.

However, now operation 508 and operation 509 are replaced by operation 601, in which the service provider creates a trust relationship between the current network and the new network. This can be done again for one-time usage or multiple usages.

Following this operation, the trust creation can be negatively acknowledged by a NACK message sent to the mobile device if the trust creation was not successful, which was already discussed above in operation 510 of Fig. 5.

Furthermore, the operations needed to resume normal communication in Fig. 6 are the same operations 511-523 as discussed previously in Fig. 5. However, since the new network has an existing trust relationship with the service provider, it can also just contact the service provider to obtain the trust relation information described in operations 512, 513, and 514.

Due to the similarities to Fig. 5, the same advantageous as discussed in Fig. 5 also apply to the sequence in Fig. 6 enabling a fast and efficient seamless handover.

Furthermore, an alternative embodiment to the previous sequence of operations is feasible, in which trust does not have to be created between the current network and the new network to result in an efficient handover. This can be performed if after operation 507 in Fig. 6, the service provider plays the role of the intermediary between the new network and the current network, i.e. ACK and NACK messages as well as security and context parameters are forwarded by the service provider from the new network to the current network or vice versa. This embodiment is possible since both the new network and the current network have an existing mutual trust relationship with the service provider.

The operations described above in Fig. 6 may be performed by the control means 100, which may be at least partially integrated into the current network 110, the mobile device 120, the new network 130, and the service provider 140, or may form a separate entity.

In the following, a further embodiment of the invention will be described with regard to Fig. 7.

Fig. 7 illustrates operations for seamless handover of a communication link for providing a service to a user of the mobile device between a current network and a mobile device to a new network, particularly outlining operations to measure communication parameters and to decide a handover. The operations shown in Fig. 7 may be carried out using the communication environment shown in Figs. 1 and 3, however, Fig. 7 is not limited thereto.

In a first operation 701, it is determined that a handover is required. This determination may, e.g., be carried out by the mobile device, detecting a reduced quality of the communication signal received from the current network or may be based on a modified communication requirement, e.g., if service parameters of the communication service provided by the service provider are changed. These parameters may include required characteristics such as data rate, quality of service requirements, real-time requirements, and similar. Further, cost considerations may trigger a decision to perform a handover.

After deciding the necessity to perform a handover, in an operation 702, available candidates for the new networks are determined. The determining operation may then be carried out by the mobile device, or may be carried out by the current network. The networks, as outlined before, can be determined by monitoring a beacon signal characterizing each network, or may be determined by analyzing messages transmitted in the communication environment. The selection of candidates for the new network may be based on the capabilities of the new networks, access technologies, and similar.

Thereafter, in an operation 703, communication parameters of the mobile device and/or the candidates for the new network are measured. In this step, the communication parameters in respect of each of the candidate new networks may be determined, including a signal quality of communication signals exchanged between the mobile device and each candidate new network, a network latency, an amount of data transmittable prior to the scheduled handover, and similar.

Further, the speed of the mobile device, the moving direction and location of the mobile device may be determined, allowing a prediction of a future location and/or movement of the mobile device.

Still further, the capabilities of the mobile device may be determined, the resources of the candidate new networks for taking over communications, a type of service provided by the service provider, and the capabilities of the candidate new networks.

The communication parameters may be determined by the elements of the communication environment, e.g., the current network, the mobile device, the service provider, the new network, and/or combinations thereof.

Based on the determined communication parameters, in operation 704 a decision can be reached, which of the candidate new networks is to be selected as target new network involved in the handover. This decision may thus take into account any of the above-outlined parameters, including a location of the mobile device, a speed of the mobile device, a moving direction of the mobile device, a signal quality and network latency of the respective candidates, capabilities of resources of the respective candidates, capabilities of the mobile device, and a type of service provided by the service provider.

The current network may perform the decision operation or, the current network may transmit information on the measured parameters to the mobile device, enabling the mobile device to perform the decision operation.

Still further, the mobile device may request the current network to perform the decision operation, if the mobile device does not receive information on the measured parameters, or is not able to collect sufficient information.

Still further, the mobile device may perform the decision operation, particularly in case the mobile device is able to maintain two or more active RF connections.

Finally, the mobile device or the current network may perform the decision operation and the mobile device may transmit information on the measured parameters to the current network.

Thereafter, in operation 705, mutual trust relationships are determined and/or missing mutual trust relationships are created. If operation 705 reveals that a mutual trust relationship between the current network and the new network and/or the service provider and the new network cannot be created, the flow may return to operation 704, and another of the candidates may be selected as new network.

After selecting an appropriate new network and creating mutual trust relationships, as detailed before, in an operation 706 context parameters are transferred to the new network, as outlined before.

Thereafter, the preparatory phase of the handover is completed, and in an operation 707, the handover of the communication link to the new network is performed.

Fig. 7 illustrates operations for appropriately selecting a new network and creation of a trust and transfer of context parameters, in order to suitably prepare the handover to the new network. Accordingly, the actual handover can be executed more swiftly, and a service interruption can be avoided.

The operations described above in Fig. 7 may be performed by the control means 100, which may be at least partially integrated into the current network 110, the mobile device 120, the new network 130, and the service provider 140, or may form a separate entity.

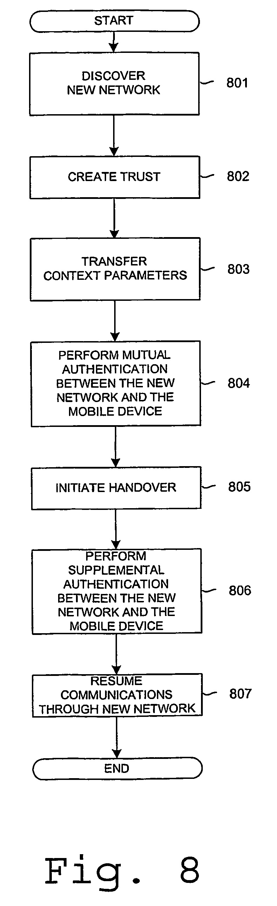

In the following, a further embodiment of the invention will be described with regard to Fig. 8.

Fig. 8 illustrates operations of a method for seamless handover of a communication link between a current network and a mobile device to a new network. Fig. 8 particularly illustrates operations to perform the handover after the preparatory phase, as detailed with regard to previous embodiments. The operations shown in Fig. 8 may be carried out using the communication environment shown in Figs. 1 or 3, however, Fig. 8 is not limited thereto.

In a first operation 801, the new network is discovered, as detailed with regard to the previous embodiments, particularly Fig. 7.

Thereafter, in an operation 802, mutual trust relationships are determined and/or missing trust relationships are created.

Thereafter, in operation 803, context parameters are transmitted to the new network, as outlined with regard to previous embodiments.

After completion of this preparatory phase of the handover, in an operation 804, a mutual authentication between the new network and the mobile device is carried out. The mutual authentication may include creating security parameters for obtaining initial access from the mobile device to the new network during the actual handover. The security parameters may be generated at the new network and may be transmitted from the new network to the current network, and from the current network to the mobile device, as at this point in time a direct connection between the mobile device and the new network may not be fully operable.

In this process, the current network may also generate security parameters for transmission to the mobile device and/or new network, e.g., security parameters generated based on a previous authentication of the mobile device at the current network, and based on the trust relationship between the current network and the new network. This allows to further reduce processing steps for mutual authentication of the mobile device and the new network, as authentication parameters created beforehand can be re-used.

After the preparatory authentication operations, the handover is initiated in an operation 805, e.g., initiated by the current network and/or the mobile device. The new network and the service provider are informed at this point in time about the up-coming handover, preferably by the current network.

Thereafter, the handover is executed and a new communication link between the mobile device and the new network is established.

In the following, in an operation 806, a supplemental authentication between the new network and the mobile device is carried out, e.g., directly via the communication link established between the new network and the mobile device. The supplemental authentication can be achieved in a short amount of time, as in operation 804, the mobile device has already been authenticated.

Thereafter, in operation 807, the communication service is continued or resumed between the service provider and the mobile device through the new network.

Fig. 8 illustrates operations to further reduce time required for a handover of communication operations to the new network, by performing a mutual authentication between the new network and the mobile device via the current network before the actual handover. A time required for a supplemental authentication directly between the mobile device and the new network can therefore be reduced.

The operations described above in Fig. 8 may be performed by the control means 100, which may be at least partially integrated into the current network 110, the mobile device 120, the new network 130, and the service provider 140, or may form a separate entity.

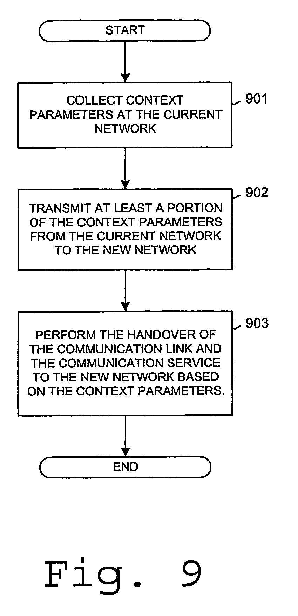

In the following, a further embodiment will be described with regard to Fig. 9.

Fig. 9 illustrates operations to hand over a communication link between a mobile device and the current network to a new network. More precisely, Fig. 9 illustrates operations for suitably preparing the handover in a pre-handover phase by collecting context parameters, and transmitting at least a portion of the collected context parameters to the new network, enabling the new network to prepare the set-up of the communication link during or after the handover. The operation shown in Fig. 9 may be carried out using the communication environment shown in Figs. 1 or 3, however, Fig. 9 is not limited thereto.

In a first operation 901, the current network collects context parameters characterizing the communication link and the communication service. A context handler of the control means 100 in Fig. 1 may carry out the collection of context parameters, however, it is also possible that context parameters are collected at any other location or entity of the communication environment and then forwarded to the current network. For example, the mobile device may be instructed, e.g., by the current network, to collect context parameters pertaining to the communication link, including context parameters pertaining to the mobile device and/or the communication service. As noted above, the context parameters collected may include any information relevant in view of the communication link and communication service. The context parameters may be selected upon detecting the necessity or desire to perform a handover, or may be collected step by step at an earlier point in time, e.g., during the ongoing communication via the communication link between the mobile device and the current network.

The context parameters may be stored at a memory unit of the current network or at an external location. For example, the current network may store a set of context parameters in association with each ongoing communication such as the communication with the mobile device 120.

Obviously, in the complex environment of mobile communications and inter-network operability, the amount of context available in association with an ongoing communication may be very large, and transferring all of the context parameters to the new network will cause a delay in handover, which may be unacceptably long and may lead to a degradation or termination of the communication service provided to the mobile device 120.

It is therefore necessary to distinguish between context that is relevant for establishing the communication link and communication service between the mobile device 120 and the new network 130 after the handover, and context information, which predominantly pertains to the communication established between the mobile device and the current network.

After collecting the context parameters at the current network, in an operation 902, at least a portion of the context parameters is transmitted from the current network to the new network. The portion of the context parameters for transmission to the new network may simply be determined by the available amount of time, i.e., if the timing of the actual handover allows, the entire set of collected context parameters can be transferred. However, if the time is limited, only a portion of the context parameters may be transmitted. Further, as noted above, context parameters applicable for the communication link and communication service to be established between the new network 130 and the mobile device 120 may be transmitted, while a transmission of context parameters not applicable to the communication link and communication service may be omitted, as it will be detailed in further embodiments.

The context parameters may be collected in a context message or a sequence of context messages, which can be transmitted to the new network via any kind of transmission medium. For example, the context parameters or messages including context parameters may be transmitted via a wireless link between the current network and the new network or, alternatively, via a fixed wireline connection between the current network and the new network, or combinations thereof. Preferably, in order to transmit as much of the context parameters to the new networks as possible, any available transmission capacity may be used. Further, compression techniques may be used to reduce the amount of data for transmission, as known in the art. Still further, if possible, the handover may be delayed as long as possible, to transmit an increased amount of context parameters.

The new network 130, receiving the context parameters from the current network, can then proceed to prepare a set-up of the communication link and/or communication service to be established between the new network and the mobile device. The context parameters ideally already specify settings and requirements of the communication to be established with the mobile device, and enable the new network to already determine appropriate communication resources and allocate the same for use during and after the handover. A communication manager of the new network may perform the above operations, i.e., prepare the set-up of the communication link and communication service. The set-up may include reserving appropriate communication resources, performing authorization or authentication checks, updating registries and similar. Further, the set-up may include contacting the service provider and already preparing the communication link between the new network and the service provider, so that a seamless communication service becomes possible, i.e., a smooth transition without service degradation.

After transmitting the context parameters and preparing the set-up of the communication link and communication service at the new network, the actual handover can take place. Therefore, in operation 903, the communication link and the communication service is handed over from the current network to the new network, and the new network continues the communication service using a communication link between the mobile device and the new network, such as the communication link 161.

The above operations illustrate the advantages of the invention in preparing the handover by transmitting context parameters from the current network to the new network. A smooth transfer of the communication from the current network to the new network becomes possible.

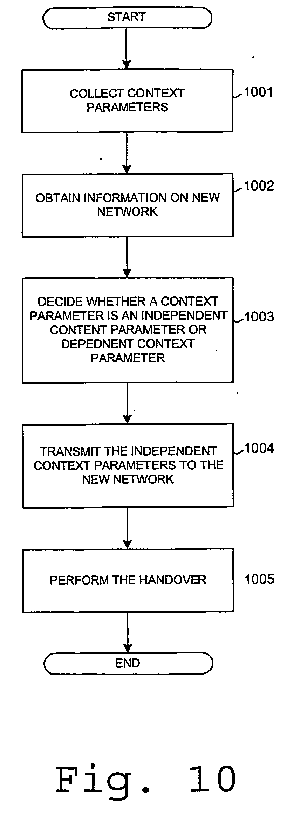

In the following a further embodiment will be described with regard to Fig. 10.

Fig. 10 illustrates operations of a method for handover of a communication link between a mobile device and a current network to a new network, particularly illustrating operations for identifying context parameters for transfer to the new network. The operations shown in Fig. 10 may be carried out using the communication environments shown in Figs. 1 or 3, however, Fig. 10 is not limited thereto.

In the embodiment of Fig. 10 it is again assumed that a communication link between a current network such as the current network 110 and a mobile device such as the mobile device 120, is to be handed over to a new network, such as the new network 130 of Fig. 1. Further, the mobile device is assumed to obtain a service from a service provider or another mobile device.

The decision that a handover is necessary or desired may have been reached as described with regard to previous embodiments, e.g. the decision to handover may be triggered by a reduced signal quality or service quality, as measured by the current network and/or the mobile device. The handover may also be triggered by cost considerations, if it is determined that another network provides the same service at reduced costs.

Further, an appropriate and new network may be selected from a number of available new networks, as detailed with other embodiments.

Starting from this basic scenario, after detecting or deciding the necessity or desire to perform a handover of the communication link to the new network, and before the axial handover takes place, a preparatory phase of the handover is conducted by collecting, in a first operation 1001 shown in Fig. 10, context parameters characterizing the communication link between the current network and the mobile device and characterizing the communication service obtained by the mobile device are collected. The collection of context parameters may be conducted as described with regard to previous embodiments, such as operation 901 shown in Fig. 9.

As noted above, the preparatory phase of the handover can be conducted only during the generally short period of time between detecting the necessity or desire to perform a handover and the actual execution of the handover, i.e., the switching over of communications between the mobile device and the current network to the new network. As this amount of time is generally insufficient to transmit all context parameters, a decision operation needs to be performed for each of the context parameters collected in operation 1001, whether the context parameter is an independent context parameter or a dependent context parameter.

However, before the decision which context parameters are to be transmitted to the new network, in an operation 1002 information on the new network is obtained to facilitate the decision making process. This preferably includes all kind of information on the new network relevant for setting up a communication link and a communication service. The information on the new network may e.g. include an identity of the new network, a communication standard under which the new network is operating, access technologies supported by the new network and capabilities of the new network, including supported data rates, service provision capabilities and similar. Further, the information on the new network may characterize a stakeholder of the new network, and e.g. information on a trust relationship between the current network and the new network, or between the new network and a service provider. In general, the information obtained on the new network may include anything which supports a decision making process whether a context parameter collected at the current network is relevant for establishing the communication and/or communication service after the handover.

The information on the new network may be obtained based on a request directly from the new network, or may be obtained from any other source of information.

Then, in an operation 1003 it is decided whether a context parameter is an independent context parameter, or a dependent context parameter. An independent context parameter is a context parameter applicable to the communication link to be established after the handover between the mobile device and the new network and/or the communication service as it is to be carried out after the handover. Likewise, a context parameter is a dependent context parameter, if it is not applicable to the communication link and the communication service after the handover.

The decision operation performed in operation 1003 will rely on the information on the new network obtained in operation 302, if compared with the corresponding features or functionality of the current network. Thus, the decision whether a context parameter is an independent context parameter or a dependent context parameter will also depend on a type of the current network, and access technology used by the current network, capabilities of the current network, a stakeholder of the current network and similar. For example, if the current network and the new network operate under the same communication standard, all context parameters relating to establishing a communication link and a communication service to the mobile device under a certain standard will be applicable at the new network after the handover, i.e., those context parameters will constitute independent context parameters. Similarly, if a type of a communication channel or an access technology used for a communication channel before and after the handover can be the same, all context parameters describing the type of communication link and access technology can be identified as independent context parameters. Further, if a mutual trust relationship exists between the current network and the new network, security parameters, identification information authorization and authentication information of the mobile device may at least partially be identified as independent context parameters as they can be re-used at the new network due to the fact that trust exists between the current network and the new network. Similarly, this supplies in cases where a mutual trust relationship between the current network and a further entity and the further entity and the new network exists. Further, if the same stakeholders operate the current network and the new network, all stakeholder related context parameters, e.g. proprietary features, settings, and similar used by the stakeholder, can be identified as independent context parameters. Furthermore, if the stakeholders of the current network and the new network are different, a mutual relationship between the stakeholder of the current network and the stakeholder of the new network may allow defining independent context parameters. Moreover, if the service provision by the current network and the new network, i.e. the provision of a communication service to the mobile device, corresponds to one another, all context parameters pertaining to the communication service can be identified as independent context parameters.

Likewise, based on the above decision process for independent context parameters, all context parameters which are not applicable to the communication and communication service after the handover can be identified as dependent context parameters, i.e., dependent solely on the communication link and service provision at the current network.

The independent context parameters and dependent context parameters may be stored in different sets of context parameters in a storage device of e.g. the current network.

Optionally, after deciding dependent and independent context parameters, context transfer policies may be applied, in order to further filter the independent context parameters. A policy to further select independent context parameters, i.e. to decide whether portions of the independent context parameters should be retained, can be determined by the stakeholder or operator of the current network. For example, certain proprietary context information relating to security aspects or proprietary functionality of the current network may be retained. Further, regulations or legislation may prohibit transmission of certain context parameters to third parties.

All independent context parameters, which should be retained, based on the above outlined policies, can be then removed from the elected set of independent context parameters. Here thereafter in an operation 1004 only the independent context parameters are transmitted to the new network. Accordingly, the amount of context parameters for transmission can be reduced to the only those context parameters which are applicable after the handover.

The above outlined procedure significantly reduces the amount of context parameters for transfer to the new network, and thus allows to optimally use the time available between the handover decision and the actual handover for context parameter transfer.

After the transfer of the context parameters, as outlined with regard to previous embodiments, the new network appropriately prepares the set-up of the communication link and the communication service, e.g. including reservation of appropriate communication resources, negotiating service provision with the service provider or other mobile device and similar.

Thereafter, the actual handover is performed in an operation 305, as detailed before.

The above embodiment lines elements of the invention allowing to reduce the amount of context parameters to be transferred, in order to more efficiently use the available time before the handover.

The operations outlined above with regard to Fig. 10 may be carried out by the control means 100 of the current network. More precisely, a context handler may be adapted to collect the context parameters, as described in operation 1001, obtain information on the new network, as outlined in operation 1002, identify independent and dependent context parameters, as detailed in operation 1003, and, the context handler may be adapted to transmit the independent context parameters to the new network as outlined in operation 1004.

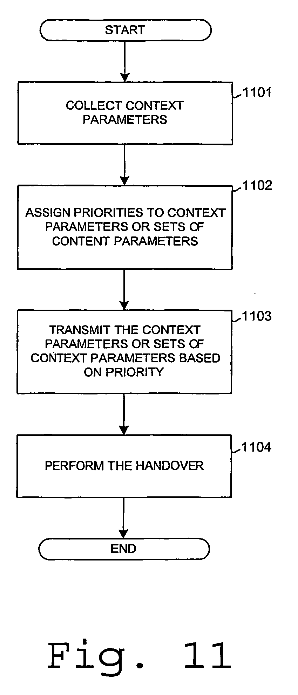

In the following a further embodiment will be described with regard to Fig. 11.

Fig. 11 illustrates operations for handing over a communication link between a current network and a mobile device to a new network, particularly illustrating operations to further make efficient use of a time for transferring context parameters.

The operations of Fig. 11 may be carried out using the communication environments of Figs. 1 or 3, however, Fig. 11 is not limited thereto.

As outlined above with regard to Fig. 11, by transmitting independent context parameters the amount of context parameters to be transferred can be significantly reduced. However, there may still not be sufficient resources available for transfer all of the independent context parameters from the current network to the new network in the short available amount of time. Therefore, Fig. 11 further describes the assignment of priorities to context parameters for transfer to the new network.

In a first operation 1101 context parameters are collected, as e.g. outlined with regard to previous embodiments.

Thereafter, in an operation 1102 priorities are assigned to context parameters or sets of context parameters. Priorities will preferably assigned to context parameters in order to reflect an importance of the context parameters for establishing the communication link and/or communication service during or after the handover. Accordingly, the highest priorities may be assigned to context parameters that are essential for establishing the communication link and/or communication service. Further, a high priority may be given to those context parameters that allow to significantly reduce communication and/or computation efforts for establishing the communication link and/or communication service during or after the handover. In an example, context parameters required for establishing the communication link between the mobile device and the new network are given a highest priority, reflecting the fact that for a successful handover it is most important to establish the communication between the mobile device and the new network. Further, context parameters required for maintaining the communication service during or after the handover are given a second highest priority. This reflects the fact that the communication service may be also negotiated or established during the handover in a set-up procedure between the mobile device and the service provider, if a working communication link between the mobile device and the new network was successfully established.

Similar to the selection of independent context parameters based on policies, the assignment of priorities to context parameters may be based on policies. These policies may be defined by a stakeholder of the current network and may also be based on the user preferences.

For example, a policy may give highest priority to context parameters related to security aspects, e.g. for certain services such as banking transactions or any other applications for handling confidential data. Such a policy would put security first, i.e., an establishment of a communication link and communication service without a certain security level would not be desired.

Moreover, the priority assignment may depend on a service type. For example, certain service may require a minimum data rate or may require certain settings to successfully establish the communication service, such as a real time data or voice communication. Other services may be less sensitive to a lack of context settings during the handover, such as web browsing applications and similar. Moreover, a priority may depend on a service level agreement, i.e., communication services requiring a high level of security for handling e.g. confidential data, may require a high priority for security related context parameters. Still further, the priority may depend on the characteristics of the new network. For example, the new network may or may not have the capability to establish a communication link or communication service without certain types of context parameters. A new network may have a capability to negotiate certain settings for a communication link or a service and may thus not necessarily require certain context parameters, while another network may not have the above capability and thus may require these context parameters.

Still further, the priority may depend on an access technology use, e.g. certain access technologies may have a hard requirement for certain context parameters. Still further, a priority may depend on a stakeholder of the new network and may reflect certain service provision policies of the new network and similar.

Thereafter, the prioritised context parameters are arranged for transmission to the new network in the order of their polarity, i.e., context parameters with the highest priority are scheduled for transmission before context parameters having a lower priority.

Further, context parameters may be arranged in groups and a priority may be assigned to individual groups of context parameters.

Therefore, security related context parameters could be formed in one group, service related context parameters could be collected in another group, communication link related context parameters could be arranged in another group and an authorization or user parameters could be arranged in still another group of context parameters. Based on the above procedure, priorities could then be assigned to the groups of context parameters, and the groups of context parameters could be arranged for transmission in accordance with their priority.

The context parameters or groups of context parameters are then transmitted in the order of their priority to the new network.

Further, a priority of the context parameters may depend on a time required for performing processing operations in association with the context parameters at the new network. For example, certain context parameters may require extensive computations or negotiations at the new network in the preparatory phase of the handover, such as security settings, authorization procedures and similar, while other context parameters may only refer to less computational efforts at the new network, e.g. service settings and similar. Accordingly, context parameters requiring a large amount of processing time at the new network shall be associated with a high priority, while context parameters require less computations at the new network can be assigned with a lower priority.

Thereafter, in an operation 1104 the handover is performed, as noted with regard to previous embodiments.

The operations outlined above with regard to Fig. 11 may be carried out by the control means 100 of the current network. More precisely, the context handler may be adapted to collect the context parameters, to assign priorities in operation 402 and to transmit the context parameters based on the priorities in operation 1103.

It is noted that the operations of Fig. 11 may be combined with the operations of Fig. 9, i.e., priorities may be assigned to independent context parameters or groups of independent context parameters, or to all available context parameters.

The embodiment of Fig. 11 illustrates how the time available between a handover decision and the actual handover can be more efficiently used for the transfer of context parameters. First context parameters with the highest priority are transmitted, and thus, if the time before the actual handover elapses, the most relevant context parameters were transferred.

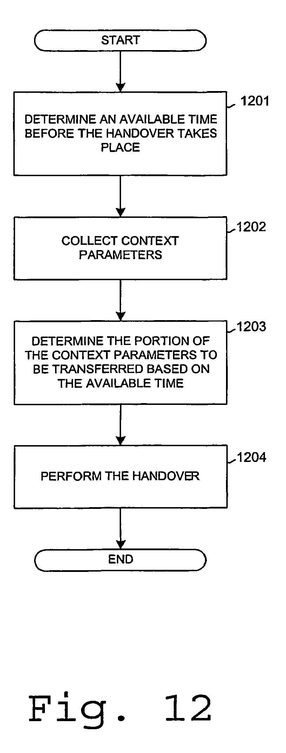

Following a further embodiment will be described with regard to Fig. 12.

Fig. 12 illustrates operations for handover of a communication link between a mobile device and a current network to a new network, particularly outlining scheduling of context transfer in the amount of time available before a handover.

The operations of Fig. 12 may be carried out by the communication environments shown in Figs. 1 or 3, however, Fig. 12 is not limited thereto.

In the embodiment of Fig. 12 it is assumed that at one point a decision to perform a handover was reached. The mobile device or the communication network, as outlined with regard to previous embodiments, may trigger this decision. Generally, a handover may be performed voluntarily or may be required in order to avoid a service or communication link termination. A voluntary handover may be based on considerations like improving a communication service, reducing costs and similar, and therefore the time between deciding to perform a handover and the schedule time for the actual handover may be set to a desired value. This value may set such that all relevant or necessary context parameters can be transmitted, and thus the time for the actual handover may be set based on the amount of context parameters, a transmission capacity for context parameters and similar, so that all context parameters scheduled for transmission can actually be transmitted.

However, there are certain situations, where a time between a handover decision and the actual handover can not be arbitrarily set, e.g., if a signal quality or service quality rapidly decreases. For example, due to a rapid movement or shielding by buildings and similar, a signal and/or service quality may be reduced and a handover must be triggered. In this case there may be a short amount of time available between the decision and a termination of the communication link or service due to insufficient signal or service quality.

Therefore, in an operation 1201 an available time between a handover decision and the actual handover is determined. The current network and/or the mobile device may determine the available time.

Further, in an operation 1202 the context parameters are collected, as detailed with regard to previous embodiments.

It is noted that operations 1201 and 1202 may be carried out concurrently, in order to more efficiently use the available time.

Thereafter, in an operation 1203 a portion of the content parameters for transfer is determined based on the available time before the actual handover. If the portion of the content parameters may be selected based on the assigned priority, based on policies, based on the distinction between dependent and independent context parameters of combinations thereof, as outlined with regard to previous embodiments. The portion of context parameters transferable before the handover will depend on the available time and the available transmission capacity. The transmission may be determined by detecting a transmission capacity of a communication channel available for transferring the context parameters. In order to increase the transmission capacity, multiple transmission channels may be identified, e.g. a direct communication channel between the current network and the new network, and further communication channels, e.g. via further elements of the communication environments, including a service provider or mobile devices. The portions of the context parameters determined to be transferable before the actual handover can then be arranged in sets and can be scheduled for transmission, e.g. in association with existing messages of the communication environment, as detailed before.

According to another embodiment, after reaching the basic decision to perform a handover, e.g., as outlined above, the actual handover may have to be performed very soon, e.g. if the mobile device travels at a high velocity towards the boundary of the coverage area of the current network, to avoid a termination of the communication service, and a transfer of context parameters must be scheduled based on the available time. However, if the actual handover is not determined by a hard requirement, an optimum point in time for the handover can be chosen. For example, after determining a target network for handover, a signal quality of the communication link between the mobile device and the current network may be determined and monitored, and the handover to the target network may be performed when the signal quality, service quality or any other link parameter is low or falls below a threshold, allowing a maximum time for the transfer of context parameters. Likewise, if the signal quality, service quality or any other link parameter is high or remains above the threshold, the execution of the actual handover could be put on hold, e.g. allowing a full transfer of context parameters.

According to another example, in a network overlay situation, an upward vertical handover VHO, e.g. to a foreign network, should be delayed as long as possible, for context transfer and due to service quality considerations, while a downward VHO, e.g. to an own network, should be performed as soon as possible after transfer of necessary context.

The portion of the context parameters being transferable prior to the handover may preferably also take into account a time of preparing the set-up of the communication link and/or communication service at the new network, as required prior to the handover in the preparatory phase.

Thereafter, in an operation 1204 the handover is performed, as noted with regard to previous embodiments.

The operations outlined above with regard to Fig. 12 may be carried out by the control means 100 of the current network. More precisely, the context handler may be adapted to perform the operation 1201 for determining the available time before the handover, to collect context in the operation 1202 and to determine the transferable portion of the context in operation 1203.

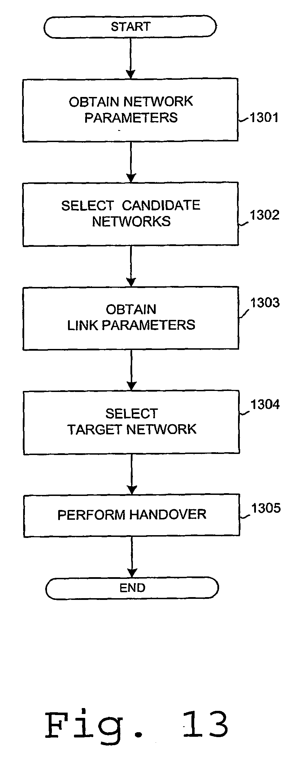

In the following a further embodiment will be described with regard to Fig. 13.

Fig. 13 illustrates operations of a method for deciding a handover of a communication link between a mobile device and a current network to a target network, the communication link for example carrying a communication service from a service provider. The operations of Fig. 13 may be carried out using the communication environments as shown in Figs. 1 or 3, however, Fig. 13 is not limited thereto.

In Fig. 13 it is assumed that a decision to perform a handover of communications was reached, e.g. due to detection of a reduced signal and/or service quality of communications between the mobile device and the current network, as noted above. However, it is also conceivable to perform the operations of Fig. 13 in intervals, e.g. after lapse of a certain time limit, in order to identify another network, which would be better suited for handling the communications with the mobile device 120 as compared to the current network. This may include improved service characteristics, such as increased bandwidth, reduced time delays, reduced costs and similar.

Consequently, in a first operation 1301, network parameters are obtained for a plurality of available networks. The available networks, as outlined before, may for example be detected by scanning beacon signals from networks in the vicinity of the current network, or may be obtained from network registries, indicating network identities, coverage areas and similar. The step of obtaining network parameters may be based on interrogating the available networks, and/or by reviewing network registries indicating network capabilities, such as supported access technologies, communication standards, the identity of a stakeholder or operator of the network and similar.

Further, the network parameters may indicate a network deployment characteristic, e.g. indicating an arrangement of cells of the network, a capacity of the cells, supported communication bandwidth, supported data types for communication services, and similar. Still further, the network parameters may indicate available network resources of each of the available networks, such as resources available for supporting voice services, data services, and similar.

Also, the network parameters may specify a coverage area of the network, and resources available in certain regions of the coverage area, e.g. individual cells of the network.

After obtaining network parameters for the available networks, in an operation 1302, candidate networks are selected based on the network parameters. The selection operation preferably rules out any networks which are not or not sufficiently compatible or able to take over communications between the mobile device and the current network during and/or after the handover. For example, only networks will be selected as candidate networks which provide for required access technologies, support the required handover mechanisms for taking over communications with the mobile device, are operated by a steak holder generally accepting or allowing handovers from the current network, provide required resources for performing the handover and for carrying on the communications after the handover and which support the communication service. Further, only those networks will be selected as candidate networks, which are appropriately located, i.e., provide for a suitable coverage area.

Operation 1302 thus leads to a set of candidate networks, which are generally suitable and/or available for handling the communications with the mobile device 120.

In the following, in an operation 1303, link parameters are obtained for the set of candidate networks selected in operation 202. As the link parameters are only obtained for the candidate networks, as opposed to the entire set of available networks, a required communication and processing overhead for selecting a target network can be reduced.

The link parameters are obtained for each individual candidate network and describe a communication link between the mobile device and the candidate network after the handover. The link parameters thus indicate the characteristics and/or performance of the communication links between the mobile device and the candidate networks during and/or after the handover. The link parameters may describe features of the mobile device, such as location, speed and direction of movement, and describe a signal quality and/or service quality of the communication links, travel path information of the mobile device, including for example GPS location information and similar.

Operation 203 may include obtaining a link parameter describing a signal quality for each candidate network, e.g. based on at least one of a signal strength of signals exchanged with the respective candidate network, a packet error rate and a bit error rate.

Further, operation 1303 may include obtaining a link parameter describing a service quality for each candidate network, e.g. based on the determined signal quality. This operation may be based on an estimation of the service quality by assuming a certain service quality based on an available signal quality. The service quality for each candidate network may depend on a communication service provider. For example, a voice service may be relatively insensitive to transmission errors, while a data service may have a low error tolerance, and may require a low bit or packet error rate.

Further, operation 1303 may include determining a link parameter specifying an available time until the handover, and the selection operation 1304 may be based on the available time before the handover. For example, candidate networks could be favoured which allow a larger time before the handover has to take place, and thus allow a better preparation of the handover. The amount of time available between the handover decision and the actual handover may depend on a coverage area of the candidate networks, a device location, device speed and direction of movement of the mobile device.

Further, operation 1303 may include detecting a link parameter representing a network latency of each of the candidate networks, the network latency corresponding to an amount of context information transferable before the handover takes place. Usually, in the preparatory phase of a handover context information describing the communication link, the communication service and further features in association with the handover, including security and authorization information, will be exchanged between the current network and the target network before the handover. The network latency, describing the delay that will occur in transferring the context parameters from the current network to the target network, is therefore an important factor. The network latency can be reduced, if extensive operations need to be performed before the context parameters can be transferred to the target network, for example, if the current network and the target network are operated by different steak holders, prior to the handover a trust relationship may have to be established prior to the context parameter transfer. Therefore, networks that already have a trust relationship with the current network will involve lower network latency, and allow a larger amount of context parameters to be transferred to the target network. Accordingly, networks with low network latency will be preferred as target network.

Further, operation 1303 may include determining a link parameter for a duration of service provision by each of the candidate networks based on the device location, the device speed and the device direction of motion, and a coverage area of the candidate network. If a constant movement of the mobile device is assumed, a duration of service can be calculated for each of the candidate networks, reflecting the time difference between entering the candidate network, i.e. the handover, and the point in time of leaving the candidate network, i.e. the point in time where the handover to another network will have to take place. As inter-network handovers are complex and require substantial computations and data exchange, candidate networks providing a long duration of service will be preferred.

Still further, the selection operation of a target network may be based on device travel path information. For example, if a mobile device is identified as travelling in a train, scheduled path information of the train can be used to determine candidate networks and/or a target network.

According to another example, travel path information could be obtained from travel path information from a navigation system, e.g. of a vehicle accommodating the mobile device. A scheduled path of the mobile device could then be detected based on destination information entered into the navigation equipment. The travel path information can then be used to select a candidate network and/or a target network. Further, the travel path information could be updated each time the destination information is changed, or if the vehicle deviates from the scheduled travel path based on the destination information, in which case alternate travel path information could be calculated from the deviation on.

According to another example, the information on the path of travel of the mobile device can be used to select a set of candidate networks along each portion of the path of travel. Further, based on the path of travel of the mobile device, a target network could be selected for each portion of the path of travel, and a sequence of target networks can be selected for a sequence of subsequent handovers along the path of travel.

The link parameters collected for each candidate network are then reviewed for each of the candidate networks, e.g. in a link parameter table, and a target network from the candidate networks is selected based on a comparison of the link parameters of the individual networks in an operation 1304.

According to an example, the selection operation may involve selecting a "winning network" for each of a plurality of link parameters. The "winning network" determinations could then be added for each of the candidate networks, and the candidate network with the highest score could be selected as target network.

If a plurality of candidate networks reach the same score, a sub-selection operation on the sub-selection set of candidate networks with the same score can be performed. In this step, for each link parameter, the "winning network" can again be determined for each of the candidate networks having reached the same score. Then, again, the candidate network with the highest score in the sub-selection set can be selected as target network. If in the sub selection operation again a plurality of networks reaches the same score, the above sub-selection operation could be repeated by again selecting the winning network from this set of networks.

According to another example, it is also conceivable to associate each link parameter for each of the candidate networks with a certain value between two limits, e.g. between 0 and 100, the value reflecting a level of agreement between the link parameter and a requirement for the handover. For example, high signal strength could be associated with a high number, and low signal strength could be associated with a low number. Similarly a high available bandwidth for a communication link may be associated with a high number, and a low bandwidth for the communication link may be associated with a low number.

Again, the values for the individual link parameters for each of the candidate networks could be entered into a table, and then the entries for each candidate network can be summed up. The candidate network with the highest score is then selected as target network.

It is noted that the above strategies for a selection operation of a target network constitute examples only and should not be construed as limiting the invention. Any other selection technique for determining a target network based on a comparison of the link parameters may be applied in the selection operation 1304.

Thereafter, in an operation 1305 the handover is performed to the target network.

According to a further example, a link parameter for a signal quality may be measured for each candidate network, based on at least one of a signal strength, packet arrow rate and bit arrow rate. Accordingly, the selection of a target network can consider the signal quality expected after the handover.

Further, a link parameter for a service quality may be estimated for each candidate network based on the signal quality. As a service quality directly describes the characteristics of a service, as perceived by a user, the selection can be further improved.

Moreover, a link parameter specifying an available time until the handover can be determined and the selection of candidate networks and the target network can be based on the available time.

Also, a link parameter may be determined describing the network latency, corresponding to an amount of context information transferable before the handover. Accordingly, the selection passes may also consider a preparatory phase before the handover, for transferring context parameters and similar.

Still further, for each candidate network a link parameter may be determined, based on a duration of service provision by the candidate networks, depending on a device location, the device speed and the device direction of motion, and a coverage area of the candidate network. This may make it advisable to refrain from a handover to a network, if the duration of service is for example below a certain threshold.

The selection operation may be based on device travel path information. This may include obtaining information on a path of travel of the mobile device, selecting candidate networks along the path of travel, and selecting a sequence of target networks for a sequence of handovers based on the path of travel. Accordingly, networks for handovers may be scheduled beforehand, allowing to increase for example the time for preparatory phases of the handovers.

The network parameters of a network may include at least one of a coverage area, network resources, a network deployment, and a stakeholder.

Further, service parameters describing the communication service may be obtained, and the selection step for selecting candidate networks may be further based on the service parameters. The service parameters may include at least one of a service type, a minimum data rate, a cost of service, a service level agreement, subscription information and quality of service parameters.

Still further, device parameters describing the mobile device may be obtained, and the selection step for selecting candidate networks may be further based on the device parameters. The device parameters may include at least one of access technology capabilities, display characteristics and processing capabilities.

According to a further embodiment, the link parameters of the target network may be compared with the link parameters of the current network, and the handover of the communication link from the current network to the target network may be performed only if the comparison indicates an improvement of at least one of the communication link and the communication service. Accordingly, if the determination reveals that the service provision provided by the current network is superior to the service provision after the handover to the target network, a handover may be cancelled. These operations may be particularly applicable in cases of co-located networks, i.e., if the current network and the target network are co-located in the same geographical area.

The necessity to decide a handover may be triggered based on at least one of a signal quality, a service quality, a path of travel of the mobile device and a lapse of a predetermined time interval. Still further, a signal quality of the communication link between the mobile device and the current network may be determined, and the handover to the target network may be performed at an earlier point in time, if the signal quality is low.

It is noted that the operations of Fig. 13 may be carried out using the control means 100 shown in Figs. 1 or 3.

It is further noted that a program or programs may be provided having instructions adapted to cause a data processing device or a network of data processing devices to realize elements of the above embodiments and to carry out the method of at least one of the above operations.

Also, a computer-readable medium may be provided having a program embodied thereon, where the program is to make a computer or a system of data processing devices to execute functions or operations of the features and elements of the above-described examples. A computer-readable medium can be a magnetic or optical or other tangible medium on which a program is recorded, but can also be a signal, e.g. analog or digital, electronic, magnetic or optical, in which the program is embodied for transmission. Further, a data structure or a data stream may be provided including instructions to cause data processing means to carry out the above operations. The data stream or the data structure may constitute the computer-readable medium. Still further, a computer program product may be provided comprising the computer-readable medium.
According to another example control means for seamless handover of a communication link between the current network and a mobile device to a new network are provided, including:
means for discovering the new network; means for creating a trust relationship between the current network, the new network and a service provider, the service provider providing a service to the mobile device through the communication link, including
- means for determining existing trust relationships between the service provider, the current network and the new network,
- means for creating a trust relationship between the new network and the service provider, if the determining step reveals existing trust relationships only between the service provider and the current network, and the current network and the new network,
- means for creating a trust relationship between the new network and the current network, if the determining step reveals existing trust relationships only between the service provider and the current network and the service provider and the new network;
means for transferring context parameters from the current network to the new network, the context parameters characterizing the communication environment; and means for performing a handover of the communication link from the current network to the new network.

The discovering step may include transmitting information about the new network from the current network to the mobile device.

According to another example the control means includes means for transmitting context information from the current network through the service provider to the new network.

According to another example the control means includes means for measuring at least one of communication parameters of the mobile device and the new network.

According to another example the communication parameters include at least one of:
- location of the mobile device;
- speed;
- moving direction
- signal quality, and
- network latency.

According to another example the communication parameters include at least one of:
- capabilities of the mobile device;
- resources of the new network;
- a type of the service provided by the service provider, and
- capabilities of the new network.

According to another example the control means includes means for deciding whether to perform the handover based on the measured communication parameters.

According to another example the control means includes means for transmitting on the measured communication parameters from the current network to the mobile device, to enable the mobile device to perform the decision operation.

According to another example the control means includes means to request the current network to perform the decision operation, if the mobile device does not receive information on the measured communication parameters.

According to another example the control means includes means to transfer the context parameters prior to performing the handover.

According to another example the control means includes means to inform the new network and the service provider about the handover.

According to another example the control means includes means to create security parameters for initial access from the mobile device to the new network during the handover.

According to another example the control means includes means to instruct the mobile device to perform the handover.

## Claims

1. Method for seamless handover of a communication link between a mobile device (120) and,a current network (110) to a new network (130), including:
discovering the new network (130);
creating a trust relationship between the current network (110), the new network (130) and a service provider, the service provider (140) providing a service to the mobile device (120) through the communication link, including
determining existing trust relationships between the service provider (140), the current network (110) and the new network (130),
creating a trust relationship between the new network and the service provider (140) by the current network (110), if the determining step reveals existing trust relationships only between the service provider (140) and the current network (110), and the current network (110) and the new network (130),
creating a trust relationship between the new network (130) and the current network (110) by the service provider (140), if the determining step reveals existing trust relationships only between the service provider and the current network (110), and the service provider and the new network;
transferring context parameters from the current network (110) to the new network (130), the context parameters characterizing the communication environment; and
performing a handover of the communication link from the current network (110) to the new network (130).

2. Method of claim 1, wherein the current network (110) discovers the new network (130) to be involved in the handover.

3. Method of one of the preceding claims, wherein the discovering step includes transmitting information about the new network from the current network (110) to the mobile device (120).

4. Method of one of the claims 1 and 3, wherein the mobile device (120) maintains two or more active RF-connections and the discovering step includes discovering the new network (130) at the mobile device (120) .

5. Method of one of the preceding claims, wherein the new network (130) contacts the service provider (140) about trust relation information.

6. Method of one of the preceding claims, wherein the service provider (140) transmits context information from the current network (110) to the new network (130).

7. Method of one of the preceding claims, including measuring at least one of communication parameters of the mobile device (120) and the new network (130).

8. Method of claim 7, wherein the communication parameters include at least one of a:
- location of the mobile device (120);
- speed;
- moving direction;
- signal quality, and
- network latency.

9. Method of one of claims 7 and 8, wherein the communication parameters include at least one of:
- capabilities of the mobile device (120);
- resources of the new network (130);
- a type of the service provided by the service provider (140), and
- capabilities of the new network (130).

10. Method of one of claims 7 to 9, including deciding whether to perform the handover based on the measured communication parameters.

11. Method of claim 10, wherein the current network (110) performs the decision operation.

12. Method of claim 10, wherein the current network transmits information on the measured communication parameters to the mobile device (120), to enable the mobile device (120) to perform the decision operation.

13. Method of one of claims 10 or 11, wherein the mobile device (120) requests the current network (110) to perform the decision operation, if the mobile device (120) does not receive information on the measured communication parameters.

14. Method of one of claims 10 or 12, wherein the mobile device (120) maintains two or more active RF-connections and performs the decision operation.

15. Method of one of claims 10, 11, 13, wherein the mobile device (120) requests the current network (110) to perform the decision operation and transmits information on the measured communication parameters to the current network.

16. Method of one of the preceding claims, wherein the context parameters are transferred prior to performing the handover.

17. Method of one of the preceding claims, wherein the current network (110) informs the new network (130) and the service provider (140) about the handover.

18. Method of one of the preceding claims, including performing a mutual authentication between the new network (130) and the mobile device (120).

19. Method of one of the preceding claims, including creating security parameters for initial access from the mobile device (120) to the new network (130) during the handover.

20. Method of claim 19, wherein the security parameters are generated at the new network (130) and transmitted from the new network to the current network (110) and from the current network to the mobile device (120).

21. Method of one of claims 19 and 20, wherein the current network generates additional security parameters for transmission to the new network (130) and the mobile device (120).

22. Method of one of the preceding claims, wherein the current network (110) instructs the mobile device (120) to perform the handover.

23. Method of one of the preceding claims, wherein a first stakeholder operates the current network (110) and a second stakeholder operates the new network (130).

24. A program having instructions adapted to carry out the method of any one of claims 1 to 23.

25. A computer readable medium, in which a program is embodied, wherein the program is to make data processing means execute the method of any one of claims 1 to 23.

26. A computer program product comprising the computer readable medium of claim 25.

27. Control means for seamless handover of a communication link between the current network (110) and a mobile device (120) to a new network (130), including:
means for discovering the new network;
means for creating a trust relationship between the current network (110), the new network (130) and a service provider (140), the service provider providing a service to the mobile device (120) through the communication link, including
- means for determining existing trust relationships between the service provider (140), the current network (110) and the new network (130),
- means for creating a trust relationship between the new network (130) and the service provider (140), if the determining step reveals existing trust relationships only between the service provider and the current network (110), and the current network and the new network,
- means for creating a trust relationship between the new network (130) and the current network (110), if the determining step reveals existing trust relationships only between the service provider and the current network (110) and the service provider (140)and the new network;
means for transferring context parameters from the current network (110) to the new network (130), the context parameters characterizing the communication environment; and
means for performing a handover of the communication link from the current network (110) to the new network (130) .

## Patentansprüche

1. Verfahren für einen nahtlosen Handover einer Kommunikationsverbindung zwischen einer Mobilvorrichtung (120) und einem aktuellen Netzwerk (110) an ein neues Netzwerk (130), mit:
Entdecken des neuen Netzwerks (130);
Erschaffen einer Vertrauensbeziehung zwischen dem aktuellen Netzwerk (110), dem neuen Netzwerk (130) und einem Dienstbereitsteller, wobei der Dienstbereitsteller (140) der Mobilvorrichtung (120) durch die Kommunikationsverbindung einen Dienst bereitstellt, mit
Bestimmen existierender Vertrauensbeziehungen zwischen dem Dienstbereitsteller (140), dem aktuellen Netzwerk (110) und dem neuen Netzwerk (130),
Erschaffen einer Vertrauensbeziehung zwischen dem neuen Netzwerk und dem Dienstbereitsteller (140) durch das aktuelle Netzwerk (110), wenn der Bestimmungsschritt existierende Vertrauensbeziehungen nur zwischen dem Dienstbereitsteller (140) und dem aktuellen Netzwerk (110), und dem aktuellen Netzwerk (110) und dem neuen Netzwerk (130) aufdeckt,
Erschaffen einer Vertrauensbeziehung zwischen dem neuen Netzwerk (130) und dem aktuellen Netzwerk 8110) durch den Dienstbereitsteller (140), wenn der Bestimmungsschritt existierende Vertrauensbeziehungen nur zwischen dem Dienstbereitsteller und dem aktuellen Netzwerk (110), und dem Dienstbereitsteller und dem neuen Netzwerk aufdeckt;
Transferieren von Kontextparametern von dem aktuellen Netzwerk (110) an das neue Netzwerk (130), wobei die Kontextparameter die Kommunikationsumgebung kennzeichnen; und
Durchführen eines Handovers der Kommunikationsverbindung von dem aktuellen Netzwerk (110) an das neue Netzwerk (130).

2. Verfahren gemäß Anspruch 1, wobei das aktuelle Netzwerk (110) das in den Handover zu involvierende neue Netzwerk (130) entdeckt.

3. Verfahren gemäß einem der vorhergehenden Ansprüche, wobei der Entdeckungsschritt ein Übertragen einer Information über das neue Netzwerk von dem aktuellen Netzwerk (110) an die Mobilvorrichtung (120) enthält.

4. Verfahren gemäß einem der Ansprüche 1 oder 3, wobei die Mobilvorrichtung (120) zwei oder mehr aktive HF-Verbindungen aufrecht erhält, und der Entdeckungsschritt ein Entdecken des neuen Netzwerks (130) bei der Mobilvorrichtung (120) enthält.

5. Verfahren gemäß einem der vorhergehenden Ansprüche, wobei das neue Netzwerk (130) den Dienstbereitsteller (140) über eine Vertrauensbeziehungs-Information kontaktiert.

6. Verfahren gemäß einem der vorhergehenden Ansprüche, wobei der Dienstbereitsteller (140) eine Kontext-Information von dem aktuellen Netzwerk (110) an das neue Netzwerk (130) überträgt.

7. Verfahren gemäß einem der vorhergehenden Ansprüche, mit einem Messen von wenigstens einem von Kommunikationsparametern der Mobilvorrichtung (120) und des neuen Netzwerks (130).

8. Verfahren gemäß Anspruch 7, wobei die Kommunikationsparameter wenigstens eines der folgenden enthalten:
- Ort der Mobilvorrichtung (120);
- Geschwindigkeit;
- Bewegungsrichtung;
- Signalqualität, und
- Netzwerklatenz.

9. Verfahren gemäß einem der Ansprüche 7 oder 8, wobei die Kommunikationsparameter wenigstens eines der folgenden enthalten:
- Fähigkeiten der Mobilvorrichtung (120);
- Ressourcen des neuen Netzwerks (130);
- einen Typ des durch den Dienstbereitsteller (140) bereitgestellten Dienstes, und
- Fähigkeiten des neuen Netzwerks (130).

10. Verfahren gemäß einem der Ansprüche 7 bis 9, mit einem Bestimmen, ob der Handover durchzuführen ist, auf der Grundlage der gemessenen Kommunikationsparameter.

11. Verfahren gemäß Anspruch 10, wobei das aktuelle Netzwerk (110) die Entscheidungsoperation durchführt.

12. Verfahren gemäß Anspruch 10, wobei das aktuelle Netzwerk eine Information über die gemessenen Kommunikationsparameter an die Mobilvorrichtung (120) überträgt, um die Mobilvorrichtung (120) zum Durchführen der Entscheidungsoperation zu befähigen.

13. Verfahren gemäß einem der Ansprüche 10 oder 11, wobei die Mobilvorrichtung (120) das aktuelle Netzwerk (110) auffordert, die Entscheidungsoperation durchzuführen, wenn die Mobilvorrichtung (120) nicht eine Empfangsinformation über die gemessenen Kommunikationsparameter empfängt.

14. Verfahren gemäß einem der Ansprüche 10 oder 12, wobei die Mobilvorrichtung (120) zwei oder mehr aktive HF-Verbindungen aufrecht erhält und die Entscheidungsoperation durchführt.

15. Verfahren gemäß einem der Ansprüche 10, 11, 13, wobei die Mobilvorrichtung (120) das aktuelle Netzwerk (110) auffordert, die Entscheidungsoperation durchzuführen, und eine Information über die gemessenen Kommunikationsparameter an das aktuelle Netzwerk überträgt.

16. Verfahren gemäß einem der vorhergehenden Ansprüche, wobei die Kontextparameter vor dem Durchführen des Handovers transferiert werden.

17. Verfahren gemäß einem der vorhergehenden Ansprüche, wobei das aktuelle Netzwerk (110) das neue Netzwerk (130) und den Dienstbereitsteller (140) über den Handover informiert.

18. Verfahren gemäß einem der vorhergehenden Ansprüche, mit einem Durchführen einer gegenseitigen Authentifizierung zwischen dem neuen Netzwerk (130) und der Mobilvorrichtung (120).

19. Verfahren gemäß einem der vorhergehenden Ansprüche, mit einem Erschaffen von Sicherheitsparametern für den Anfangszugriff von der Mobilvorrichtung (120) auf das neue Netzwerk (130) während des Handovers.

20. Verfahren gemäß Anspruch 19, wobei die Sicherheitsparameter bei dem neuen Netzwerk (130) erzeugt werden und von dem neuen Netzwerk an das aktuelle Netzwerk (110) und von dem aktuellen Netzwerk an die Mobilvorrichtung (120) übertragen werden.

21. Verfahren gemäß einem der Ansprüche 19 oder 20, wobei das aktuelle Netzwerk zusätzliche Sicherheitsparameter zur Übertragung an das neue Netzwerk (130) und die Mobilvorrichtung (120) erzeugt.

22. Verfahren gemäß einem der vorhergehenden Ansprüche, wobei das aktuelle Netzwerk (110) die Mobilvorrichtung (120) zum Durchführen des Handovers anweist.

23. Verfahren gemäß einem der vorhergehenden Ansprüche, wobei ein erster Beteiligter das aktuelle Netzwerk (110) betreibt und ein zweiter Beteiligter das neue Netzwerk (130) betreibt.

24. Programm mit Anweisungen, die zum Ausführen des Verfahrens gemäß einem der Ansprüche 1 bis 23 ausgebildet sind.

25. Computer-lesbares Medium, in dem ein Programm aufgenommen ist, wobei das Programm dazu ausgebildet ist, eine Datenverarbeitungseinrichtung zum Ausführen des Verfahrens gemäß einem der Ansprüche 1 bis 23 zu bringen.

26. Computerprogrammprodukt mit dem Computer-lesbaren Medium gemäß Anspruch 25.

27. Steuereinrichtung für einen nahtlosen Handover einer Kommunikationsverbindung zwischen dem aktuellen Netzwerk (110) und einer Mobilvorrichtung (120) an ein neues Netzwerk (130), mit:
einer Einrichtung zum Entdecken des neuen Netzwerks;
einer Einrichtung zum Erschaffen einer Vertrauensbeziehung zwischen dem aktuellen Netzwerk (110), dem neuen Netzwerk (130) und einem Dienstbereitsteller (140), wobei der Dienstbereitsteller der Mobilvorrichtung (120) durch die Kommunikationsverbindung einen Dienst bereitstellt, mit
- einer Einrichtung zum Bestimmen existierender Vertrauensverhältnisse zwischen dem Dienstbereitsteller (140), dem aktuellen Netzwerk (110) und dem neuen Netzwerk (130),
- einer Einrichtung zum Erschaffen einer Vertrauensbeziehung zwischen dem neuen Netzwerk (130) und dem Dienstbereitsteller (140), wenn der Bestimmungsschritt existierende Vertrauensbeziehungen nur zwischen dem Dienstbereitsteller und dem aktuellen Netzwerk (110), und dem aktuellen Netzwerk und dem neuen Netzwerk aufdeckt,
- eine Einrichtung zum Erschaffen einer Vertrauensbeziehung zwischen dem neuen Netzwerk (130) und dem aktuellen Netzwerk (110), wenn der Bestimmungsschritt existierende Vertrauensbeziehungen nur zwischen dem Dienstbereitsteller und dem aktuellen Netzwerk (110), und dem Dienstbereitsteller (140) und dem neuen Netzwerk aufdeckt;
eine Einrichtung zum Transferieren von Kontextparametern von dem aktuellen Netzwerk (110) an das neue Netzwerk (130), wobei die Kontextparameter die Kommunikationsumgebung kennzeichnen; und
eine Einrichtung zum Durchführen eines Handovers der Kommunikationsverbindung von dem aktuellen Netzwerk (110) an das neue Netzwerk (130).

## Revendications

1. Procédé pour le transfert intercellulaire en continuité d'une liaison de communication entre un dispositif mobile (120) et un réseau courant (110) vers un nouveau réseau (130), comprenant :
la découverte du nouveau réseau (130) ;
la création d'une relation sécurisée entre le réseau courant (110), le nouveau réseau (130) et un fournisseur de services, le fournisseur de services (140) fournissant un service au dispositif mobile (120) par l'intermédiaire de la liaison de communication, comprenant
la détermination de relations sécurisées existantes entre le fournisseur de services (140), le réseau courant (110) et le nouveau réseau (130),
la création d'une relation sécurisée entre le nouveau réseau et le fournisseur de services (140) par le réseau courant (110), si l'étape de détermination révèle des relations sécurisées existantes seulement entre le fournisseur de services (140) et le réseau courant (110), et entre le réseau courant (110) et le nouveau réseau (130),
la création d'une relation sécurisée entre le nouveau réseau (130) et le réseau courant (110) par le fournisseur de services (140), si l'étape de détermination révèle des relations sécurisées existantes seulement entre le fournisseur de services et le réseau courant (110), et entre le fournisseur de services et le nouveau réseau ;
le transfert de paramètres de contexte du réseau courant (110) vers le nouveau réseau (130), les paramètres de contexte caractérisant l'environnement de communication ; et
l'exécution d'un transfert intercellulaire de la liaison de communication depuis le réseau courant (110) vers le nouveau réseau (130).

2. Procédé selon la revendication 1, dans lequel le réseau courant (110) découvre le nouveau réseau (130) à impliquer dans le transfert intercellulaire.

3. Procédé selon l'une des revendications précédentes, dans lequel l'étape de découverte comprend la transmission d'informations concernant le nouveau réseau depuis le réseau courant (110) vers le dispositif mobile (120).

4. Procédé selon l'une des revendications 1 et 3, dans lequel le dispositif mobile (120) maintient deux ou plusieurs connexions HF actives, et l'étape de découverte comprend la découverte du nouveau réseau (130) au niveau du dispositif mobile (120).

5. Procédé selon l'une des revendications précédentes, dans lequel le nouveau réseau (130) contacte le fournisseur de services (140) concernant des informations de relation sécurisée.

6. Procédé selon l'une des revendications précédentes, dans lequel le fournisseur de services (140) transmet les informations de contexte depuis le réseau courant (110) vers le nouveau réseau (130).

7. Procédé selon l'une des revendications précédentes, comprenant la mesure d'au moins un des paramètres de communication du dispositif mobile (120) et du nouveau réseau (130).

8. Procédé selon la revendication 7, dans lequel les paramètres de communication comprennent au moins l'un de ce qui suit :
- localisation du dispositif mobile (120) ;
- vitesse ;
- sens de déplacement ;
- qualité de signal, et
- délai de transit du réseau.

9. Procédé selon l'une des revendications 7 et 8, dans lequel les paramètres de communication comprennent au moins l'un de ce qui suit :
- capacités du dispositif mobile (120) ;
- ressources du nouveau réseau (130) ;
- type du service fourni par le fournisseur de services (140), et
- capacités du nouveau réseau (130).

10. Procédé selon l'une des revendications 7 à 9, comprenant la décision de savoir s'il faut effectuer le transfert intercellulaire en se basant sur les paramètres de communication mesurés.

11. Procédé selon la revendication 10, dans lequel le réseau courant (110) effectue la prise de décision.

12. Procédé selon la revendication 10, dans lequel le réseau courant transmet des informations concernant les paramètres de communication mesurés au dispositif mobile (120), pour permettre au dispositif mobile (120) d'effectuer la prise de décision.

13. Procédé selon l'une des revendications 10 ou 11, dans lequel le dispositif mobile (120) demande au réseau courant (110) d'effectuer la prise de décision, si le dispositif mobile (120) ne reçoit pas d'informations concernant les paramètres de communication mesurés.

14. Procédé selon l'une des revendications 10 ou 12, dans lequel le dispositif mobile (120) maintient deux ou plusieurs connexions HF actives et effectue la prise de décision.

15. Procédé selon l'une des revendications 10, 11, 13, dans lequel le dispositif mobile (120) demande au réseau courant (110) d'effectuer la prise de décision et transmet des informations concernant les paramètres de communication mesurés au réseau courant.

16. Procédé selon l'une des revendications précédentes, dans lequel les paramètres de contexte sont transférés avant d'effectuer le transfert intercellulaire.

17. Procédé selon l'une des revendications précédentes, dans lequel le réseau courant (110) informe le nouveau réseau (130) et le fournisseur de services (140) concernant le transfert intercellulaire.

18. Procédé selon l'une des revendications précédentes, comprenant l'exécution d'une authentification mutuelle entre le nouveau réseau (130) et le dispositif mobile (120).

19. Procédé selon l'une des' revendications précédentes, comprenant la création de paramètres de sécurité pour l'accès initial du dispositif mobile (120) au nouveau réseau (130) pendant le transfert intercellulaire.

20. Procédé selon la revendication 19, dans lequel les paramètres de sécurité sont produits au niveau du nouveau réseau (130) et sont transmis depuis le nouveau réseau vers le réseau courant (110) et depuis le réseau courant vers le dispositif mobile (120).

21. Procédé selon l'une des revendications 19 et 20, dans lequel le réseau courant produit des paramètres de sécurité supplémentaires pour transmission au nouveau réseau (130) et au dispositif mobile (120).

22. Procédé selon l'une des' revendications précédentes, dans lequel le réseau courant (110) charge le dispositif mobile (120) d'effectuer le transfert intercellulaire.

23. Procédé selon l'une des revendications précédentes, dans lequel une première partie prenante met en oeuvre le réseau courant (110) et une seconde partie prenante met en oeuvre le nouveau réseau (130).

24. Programme comportant des instructions conçues pour exécuter le procédé selon l'une quelconque des revendications 1 à 23.

25. Support lisible par ordinateur, dans lequel un programme est intégré, dans lequel le programme sert à définir un moyen de traitement de données pour exécuter le procédé selon l'une quelconque des revendications 1 à 23.

26. Produit formant programme informatique comprenant le support lisible par ordinateur de la revendication 25.

27. Moyen de commande pour le transfert intercellulaire en continuité d'une liaison de communication entre le réseau courant (110) et un dispositif mobile (120) vers un nouveau réseau (130), comprenant :
un moyen pour découvrir le nouveau réseau ;
un moyen pour créer une relation sécurisée entre le réseau courant (110), le nouveau réseau (130) et un fournisseur de services (140), le fournisseur de services fournissant un service au dispositif mobile (120) par l'intermédiaire de la liaison de communication, comprenant
- un moyen pour déterminer des relations sécurisées existantes entre le fournisseur de services (140), le réseau courant (110) et le nouveau réseau (130),
- un moyen pour créer une relation sécurisée entre le nouveau réseau (130) et le fournisseur de services (140), si l'étape de détermination révèle des relations sécurisées existantes seulement entre le fournisseur de services et le réseau courant (110), et entre le réseau courant et le nouveau réseau,
- un moyen pour créer une relation sécurisée entre le nouveau réseau (130) et le réseau courant (110), si l'étape de détermination révèle des relations sécurisées existantes seulement entre le fournisseur de services et le réseau courant (110), et entre le fournisseur de services (140) et le nouveau réseau ;
un moyen pour transférer des paramètres de contexte depuis le réseau courant (110) vers le nouveau réseau (130), les paramètres de contexte caractérisant l'environnement de communication ; et
un moyen pour effectuer un transfert intercellulaire de la liaison de communication depuis le réseau courant (110) vers le nouveau réseau (130).
